# EUROPEAN PATENT APPLICATION

(11) **EP 3 842 977 A1**
(43) Date of publication of application: **30.06.2021**
(21) Application number: 18931031.1
(22) Date of filing: 21.08.2018
(51) Int. Cl.: G06F 21/62

(54) **SYSTEM AND METHOD FOR ASSISTING USAGE OF USAGE OBJECT**

(71) Applicant: Matsunaga, Chikara, Hyogo 6580032 (JP)
(72) Inventor: Matsunaga, Chikara, Hyogo 6580032 (JP)
(74) Representative: Horn Kleimann Waitzhofer Patentanwälte PartG mbB
(86) International application number: PCT/JP2018/030877
(87) International publication number: WO 2020/039509

(57) **Abstract**

To provide a usage assistance system by which an authority person allows a user to use a usage object, the usage object is a movable or immovable material object; a non-material object in the form of data, an ownership right, or an intangible property right or virtual currency; or a section in which the material object or non-material object are used. An opening secret code 311, a log data unit 313 for recording usage log data, and a closing secret code 314 for correctly confirming and closing are set for each usage assistance application file 310 used by a usage assistance application program 320 that control equipment functions for the usage object. Management is performed to allow usage of the usage object to a specified large number or an unspecified large number of users by temporarily determining usage rights, and to approve authentication for usage content when returning the usage rights; security settings are implemented to confirm and approve authentication for remaining operation content as a usage log: and it is also possible for users to reliably confirm usage content when usage is completed.

## Description

### TECHNICAL FIELD

The present invention relates to a usage assistance system and method for a usage object in which an authority person allows a user to use the usage object such as a movable property, a real estate, and a use unit thereof.

A variety of objects are included. These are not limited to; the following are included.

For example, the usage object is corporeal things such as a movable property and a real estate.

The usage object may be a mobile object including an automobile vehicle, a cargo vehicle, a railway vehicle, an aircraft, a ship, and the like, and a use unit is a driver's seat of a mobile object, a guest seat of a mobile object, a passenger compartment, or a shared facility. The usage object may be a real estate including a house, an apartment house, a condominium, a building, or the like, and the use unit is a real estate ownership section, a rental section, or a shared facility. The usage object may be a real estate including a hotel, a private house for lodging, a private apartment house for lodging, and the like, and the use unit is a real estate rental section or a shared facility. In addition, the usage object may be a logistics warehouse, and its use unit is called a storage section of a logistics warehouse. The usage object may be a service providing facility, and the use unit is a facility of a service providing facility. There is a variety of service providing facilities, for example, a medical institution, a care facility, a clinic, a sports club, a wedding hall, a funeral hall, a restaurant table or a private room, a beauty salon, a hairdressing chamber, a movie theater, a culture classroom, a rental conference room, a golf course, and the like. The usage object may be a data capacity in which the use object is a server and the data storage uploading and storing by a computer resources.

For example, the usage object is intangible object such as a data file, a data content, an ASP service, a cloud service, a virtual space, a virtual currency, etc., and intangible object such as property rights and intellectual property right such as copyright, patent right and trademark right.

### BACKGROUND ART

Various application program are running using a computer system, and various usage assistance systems related to various usage objects have been developed according to the target usage objects.

A person who uses the application program of the use support system related to the object to be used should prove himself as an authenticated system user but not an un-authority person. Therefore, in the prior art, it is known that authentication processing is imposed by various security measures such as an ID code, a password, and biological information input when an application program is started, and an application file is opened. In the prior art, if it is authenticated that the user of the use assistance system is the authorized system user at the start of application program use, no further authentication is performed after that, and security measures such as input of a particular password are not taken when closing the application file.

In the prior art, even if the usage object is movable property, real estate or their use area and the users is a large number of specific users or a large number of unspecified users, the above-mentioned system management is the same as that the usage object and the users are limited case. The actual situation is that the user of the usage assistance system takes only authentication procedure at the start of use of application program.

The authentication process in the prior art will be briefly described. When an application program is started and an application file is opened, a countermeasure for inputting various code information that the input of a password is widely adopted. According to the security level, a password is simply inputted from the keyboard or the ID information is inputted from the IC card carried with the password, and biological information such as a fingerprint, a vein pattern or the like is inputted with the password. In addition, there are some cases in which the operation by one person is not enough, and the application file can be opened only when the passwords and ID information of a plurality of authority persons are collected. In this way, some application programs are set with a high degree of security in order to open the application file and make it operable.

Once the application program is launched and the application file is operational, the user can edit the application file using the application program, but when operating the application program and using special functions, separately, passwords, ID information, etc. may be required individually.

In this way, security may be set when opening an application file or using a special function. However, on the contrary, when the use of the application program is finished and the application file is closed, or when the use of the special function is finished, the closing operation itself does not require the input of any password or ID information. There is no such thing as security settings. Most things can be simply closed by entering commands such as "Exit" or "Close" or click the "closing" button.

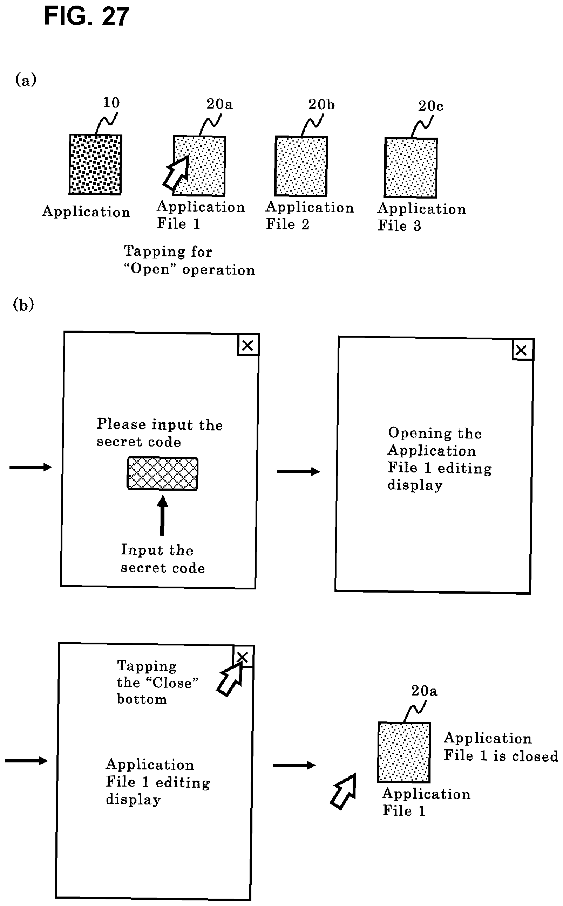

Fig.27 is a drawing the operation of the general application program for starting and opening the application file, using, then closing. It is an example showing the typical operation for opening and closing the application file.

As shown in Fig.27 (A), application program 10 is installed to the computer system. When the user starts to use the application program 10, the user selects the icon of the application program 10 displaying onto the monitor by the pointing device such as mouse. With the user input application file open command by the double click operation, the application program 10 is started.

In this case, several application files such as 20a, 20b, 20c that can be operated by the application program 10 are installed to the computer system, and the corresponding icons are displayed on the monitor. The user selects the icon of the application file 20 by the pointing device such as a mouse and conducts the double click operation, and the selected application file 20 is opened by the application program 10. The application file 20 is opened by the application program 10 to be operable, and current data contents are displayed onto the monitor.

If the application file 20 has a security measure for requesting password input, a password input column pops-up for confirming the use authority as shown in the upper figure of Fig.27 (B). As shown above, password input may be requested if the user starts application program 10 and opens application file 20 for operating in the prior art. If higher security is combined, the input of the identification information from IC card and the input of the biological information are requested besides the password input.

As shown in the upper figure of Fig.27 (B), if the user inputs requested password and code information for opening the application file 20 via keyboard or other input devices, and the authentication process is identified successfully to fulfill the requested security level, the application file 20 is opened normally.

Next, as shown in the lower figure of Fig.27 (B), when the user finishes the desired operation through the application file 20, the user can simply close the application file 20 by pushing the command button or the pull-down menu such as "End button" and "Close button" with the pointing device such as a mouse. The application program 10 and the application file 20 are simply finished and closed normally.

The conventional application program 10 does not request any input for special password and ID information when closing the application file 20. The conventional application program 10 finishes simply and closes the application file 20 simply.

As shown above, when accessing the application file 20, various information input is requested according to the employed security level for confirming the authentication of the user at the opening of the application file 20. However, once the authentication check is conducted at the opening event, it is assumed that the right person who satisfied authentication keeps on using under his authentication, and the finishing operation and closing operation of the application file 20 is conducted under his authentication. Therefore, the conventional application program 10 does not request any special input of the password and ID information at the closing operation of the application file 20.

If the authority person who opened the application file uses the usage object, the usage status of the usage object and the usage log recorded in the application file according to the usage status can be recognized as correct, and the usage is completed. Then, the application program may be terminated and closed by performing the closing operation of the application file as it is.

Prior art 1: JP 2006-277193

### DISCLOSURE OF THE INVENTION

### THE PROBLEMS TO BE SOLVED

Here, it is assumed that the usage object is a tangible object of movement or real estate, or includes data, ownership, intangible property right, and intangible property of virtual currency, or an use section thereof, and the authority is temporarily granted or used for a large number of specific or unspecified users to be rented or used. In this case, the user of the use assistance system is a large number or many specific users or unspecified users.

Normally, when such a user is a large number or specified users or unspecified users, the authority person who must manage to have the user properly use the usage object within the planned range. For example, it is necessary to confirm the person who uses the usage object is a person who has been properly granted the usage authority by the authority person, but not impersonated person (a person who has been granted the true usage authority even if the operation is anonymous can be accepted). In addition, it is necessary to accurately grasp the usage status (date and time of use, content of use) of the equipment function in the movable property, real estate, or their usage section. When charging according to the usage status, it must be linked with the charging process. Security management is also important.

In the present invention, such a relationship is established by an authority person (the owner of the usage object, a person who has obtained the operating right from the owner or a person who is entrusted with the operation) to the user as "temporary usage authority". It assists the usage object management by executing processing from the viewpoints of "use based on the granted usage authority (when and who)", and "grasp and determination of usage content (what was done)".

Confirmation of whether or not there is no error in the contents of the use log data in the application file 20 recorded through the use of the usage object by the temporary use authority to the user is set as the end condition of the application file at the end of the application program, that is, at the time of returning the granted use authority.

In addition, there may be a case that the user desires to confirm whether or not the use log data reflecting the operation content is correct as it is. In particular, the charging processing is performed for the use of the usage object, and when the credit service of the credit card company and the charging processing are interlocked, a step of confirming and approving from the viewpoint of security or security is required.

In order to achieve the above-mentioned object, the purpose of the present invention is to provide an use assistance system and a method for using of an usage object, the system being configured so as to temporarily apply use authority to a large number of specific or unspecified users to make use of the usage object, to give approval to the contents of use, to collect and confirm the use data as an use log, and to effectively reduce false processing or the like that is different from the fact.

### MEANS FOR SOLVING THE PROBLEMS

In order to achieve the above object, the present invention of the usage assistance system in which the authority person allows the user to use the usage object, the usage assistance system comprises; a usage assistance application program allows the user to use the equipment function equipped by the usage object; a usage assistance application file used by the usage assistance application program, wherein an open secret code for opening the usage assistance application file and a closing secret code for closing the usage assistance application file normally are set; an application file open function that opens the usage assistance application file by matching the input code with the open secret code at the opening of the usage assistance application file, and an application file close function that normally terminates and closes the usage assistance application file by matching the input code with the close secret code at the terminating and closing of the usage assistance application file.

For example, a usage object may include a tangible object of a movable property or real estate, an intangible property of data, ownership right, a virtual currency, a virtual space, or a use section thereof.

It is preferable that the authority system used by the authority person is provided with a use authority control application program. The use authority control application program is provided with an equipment function control part for setting the use authority to the user for each equipment function of the usage object or the use range thereof.

By providing the equipment function control part, it is possible to limit the range of use according to each user, and it is possible to provide detailed control for the usage object.

Here, in the above configuration, the use assistance application file is provided with a log data part for recording and holding the use log data of the equipment function of the usage object, and the use assistance application program is provided with a log data control function for recording the use log data of the equipment function of the usage object in the log data area in the use assistance application file.

By recording the usage log in the usage assistance application file via the log data control function, the person who can use the usage object through the authentication of the open secret code and the close secret code is identified, and the usage log data is stored in the log data section.

In order to give the usage authority to any specified person or unspecified person, the usage authority control application program of the authority system has a secret code setting function for setting the open secret code and the close secret code, and a notification function for notifying the user application program of the user system used by the user what the set open secret code and the set close secret code.

With the above configuration, the open secret code and the close secret code are set by the secret code setting function, and by notifying any specified person or unspecified person, the user inputs the open secret code when opening the application file. The usage assistance application file can be opened through application file opening function, and the usage object can be used. The user inputs the close secret code after using the usage object and close the usage assistance application file by the application file closing function.

The secret code can be set by the authority system side or can be set corresponding to the request from the user system side.

Further, the secret code set as the open secret code and the close secret code may be any one of user ID information, biometric information, credit card information, debit card information, or a combination thereof for identifying the person.

For example, there are a personal identification number consisting of numbers, a personal identification code including alphabets, and biological information such as a face image pattern, a fingerprint pattern, a vein pattern, an iris pattern, and a voiceprint pattern. As a code input means, a device for reading biometric information (camera for face image authentication, fingerprint reader, vein pattern reader, iris pattern reader, voice input device, etc.) can also be equipped.

Further, as the secret code to be set as the open secret code and the close secret code, it is also possible to limit the validation of the secret code only one time and use it as a disposable one-time secret code.

In the usage support system of the present invention, a plurality of users who given the usage authority can be set. If multiple sets of open and close secret can be set via the secret code setting function, one set of open secret code and closed secret code corresponds to one specific user. By doing so, it is possible to set a plurality of users. By providing usage sequence control data that controls the startup order in which the application file opening function and application file closing function can be activated for each set of open secret code and close secret code, a sequence of usage order for multiple users can be managed.

In the above configuration, multiple users are set by the authority system. It is possible that there is also another configuration in which users connect a so-called usage authority chain in which the authorized user can designate the next user.

The first pattern of the usage authority chain is a pattern in which the user decides the next user and rewrites the open secret code, but the close secret code is inherited as it is so that the close secret code can be used in common.

In the collection of usage log data, every time the succeeded user executes the closing process by the application file closing function, the user application program sends the log data stored in the log data section to the authority system or sends to distributed log data server cluster provided on the network. The log data can be collected.

The second pattern of the usage authority chain is a pattern in which the user decides the next user, rewrites the open secret code, and informs the next user, but the close secret code is not inherited, and the authority system closes the usage assistance application file. The log data stored in the log data section is sent to the authority system or the distributed log data server cluster provided on the network via the user application program. The log data can be collected. The third pattern of the usage authority chain is a pattern in which the user decides the next user, rewrites the open secret code and the close secret code, and notifies them to the next user. One user opens the usage assistance application file with the application file opening function using the open secret code, the user uses the usage object, finishes using the usage object, and sets the secret code before closing the usage assistance application file with the close secret code. By setting the open secret code and close secret code to be used by the next user and setting to take over the usage authority of the usage object to the next user. In this way, a usage authority chain for the usage object is built.

Next, in the usage assistance system of the usage object of the present invention, the charging process associated with the usage of the usage object can be automatically linked.

The usage assistance system is configured with a usage object charging processing function that performs charging processing according to the usage status of the equipment function. The user system is configured with the user payment processing function, and the authority system is configured with the authority charging processing function. With the above configuration, the usage content and the charging content related to the usage are determined and settled among the three parties.

Next, an application program example of the usage assistance system of the present invention will be described.

The usage assistance system of the use object of the present invention can be applied to various systems. The following are examples.

For example, there is a mobile body including an automobile vehicle, a cargo vehicle, a railway vehicle, an aircraft, a ship, and the like, an use unit being a driver chamber of a mobile body, a seat of a mobile body, a passenger compartment or a shared facility. The usage object cab be a real estate including a house, an apartment house, a condominium, a building, or the like, and the use unit is a real estate ownership section, a rental section, or a shared facility. The usage object can be a real estate including a hotel, a private house for lodging, a private apartment house for lodging, and the like, and the use unit is a real estate rental section or a shared facility. In addition, the usage object can be a logistics warehouse, and its use unit as a storage section of the logistics warehouse. The usage object can be a service providing facility, and its use unit. A variety of service providing facilities can be included, for example, a medical institution, a care facility, a clinic, a sports club, a wedding hall, a funeral hall, a restaurant table or a private room, a beauty salon, a hairdressing chamber, a movie theater, a culture classroom, a rental conference room, a golf course, and the like. The usage object can be a server, and its use division as a data capacity for uploading and storing the content data or data of the server.

For example, a usage object can be a intangible property such as a data file, data such as data contents and virtual currency, a virtual space such as a cloud, a right such as ownership, copyright, etc. and an intellectual property right such as a patent right or a trademark right.

### THE EFFECT OF THE INVENTION

The usage assistance system of the usage object of the present invention has the above-mentioned configuration, and in order to allow the user to use the usage object, the authority person "temporarily grants the usage authority" to the user and uses the usage object. Various processes can be executed from the viewpoint of "returning the granted usage authority" from the finished user and "approving the usage content" by the authority person who received the return of the usage authority.

In addition, there may be a specific number of users and an unspecified number of users, but if ID information, biometric information, credit card information or debit card information for identifying the person is obtained in advance before usage, the user authentication process can be performed. It is possible to carry out the operation, and it is also possible to execute the charging process in conjunction with the payment processing function of the financial institution.

### BRIEF DESCRIPTION OF THE DRAWINGS

Fig. 1 is a schematic view of the configuration of the usage assistance system 1 according to Embodiment 1.
Fig.2 is a schematic view of a flow of the authority setting procedure of a usage object 300 specified by the authority system in a usage assistance system 1.
Fig.3 is a schematic view of a flow of the authority setting procedure of a usage object 300 corresponding to the request from the user system in a usage assistance system 1.
Fig.4 is a schematic view of the configuration of the usage assistance system 1a according to Embodiment 2.
Fig.5 is a schematic view showing a flow of setting procedure for an open secret code 1 and a close secret code 1 and setting procedure for use sequence control data to the user system 200-1 used by user 1.
Fig.6 is a schematic view showing a flow of setting procedure for an open secret code 1 and a close secret code 1 and setting procedure for use sequence control data to the user system 200-1 used by user 2.
Fig.7 is a schematic view showing of a flow of setting procedure for an open secret code 1 and a close secret code 1 and setting procedure for use sequence control data to the user system 200-1 used by user 3.
Fig.8 is a schematic view showing a part of the flow of the processing of the usage assistance system 1a of the use object according to the Embodiment 2.
Fig.9 is a schematic view of the configuration of the usage assistance system 1b according to Embodiment 3.
Fig.10 is a schematic view showing a flow of data of the use authority chain of a first pattern.
Fig.11 is a schematic view showing a flow of data of the use authority chain of a second pattern.
Fig.12 is another schematic view showing a part of the flow of the processing of the usage assistance system 1b of the use object according to the Embodiment 3.
Fig.13 is a schematic view showing a flow of data of a use authority chain of a third pattern.
Fig.14 is a schematic view of the configuration of the usage assistance system 1 according to Embodiment 4.
Fig. 15 is a schematic view showing a selection display of the equipment function 301 when the usage assistance system 1 of the use object according to Embodiment 5 is applied to the mobile body system.
Fig. 16 is a schematic view showing a selection display of the equipment function 301 of the driver's seat when the usage assistance system 1 of the use object according to Embodiment 6 is applied to the mobile body system.
Fig. 17 is a schematic view showing a selection display of the equipment function 301 when the usage assistance system 1 of the use object according to Embodiment 7 is applied to the reservation system of the rental car.
Fig.18 is a schematic view showing a selection display of an equipment function 301 of real estate when the usage assistance system 1 of the use object according to Embodiment 8 is applied to a real estate system.
Fig.19 is a schematic view showing a selection display of a hotel equipment function 301 when the usage assistance system 1 of the use object according to Embodiment 9 is applied to a real estate system.
Fig.20 is a schematic view showing a selection display of an equipment function 301 of a logistics warehouse when the usage assistance system 1 of the use object according to Embodiment 10 is applied to a logistics warehouse system.
Fig.21 is a schematic view showing a selection display of the golf course and the equipment function 301 of the shared facility when the usage assistance system 1 according to Embodiment 11 is applied to the service providing facility system.
Fig.22 is a schematic view showing a selection display of an equipment function when the usage assistance system 1 according to Embodiment 12 is applied to the service providing facility system.
Fig.23 is a schematic view showing a selection display of an equipment function when the usage assistance system 1 according to Embodiment 13 is applied to the server.
Fig.24 is a schematic view showing a selection display of an equipment function when the usage assistance system 1 according to Embodiment 14 is applied to a cloud service.
Fig.25 is a schematic view showing a configuration example when the usage assistance system 1a to be used in Embodiment 15 is applied to the driving support system.
Fig.26 is a schematic view showing a selection display at the time of setting the use authority of the automobile and the equipment function 301 of the usage assistance system 1a for Embodiment 15.
Fig.27 is a schematic view showing an operation outline of a conventional general application program.

### DETAILED DESCRIPTION OF THE PREFERRED EMBODIMENT

Some embodiments of the usage assistance system according to the present invention are described below with reference to the relevant drawing. Needless to add, the claims of the present invention are not limited to the configuration shown in the following embodiments.

Embodiment 1 shows an example of the basic system configuration of the usage assistance system.

Embodiment 2 assumes a plurality of users, and when a plurality of open secret code and close secret code are set, respectively.

Embodiment 3 is an example of configuring a use authority chain in which the use authority is linked by operating the user application program by a user who has set the use authority, set and takeover an open secret code and a close secret code to the next user.

Embodiment 4 is an example of a case in which charging processing is linked with payment processing of a financial institution.

Embodiment 5 and following Embodiment describe an example applied to the use assistance of various use objects and equipment functions. Although some embodiments are described in this Example 5, there may be a variety of application program configurations without being limited to this specific embodiment.

### Embodiment 1

The usage assistance system 1 of the present invention of Embodiment 1 is described. The usage assistance system 1 of the present invention is a system that assists the usage of the usage object by exchanging usage authority.

As a basic configuration, the usage assistance system 1 of the present invention includes an authority system 100 used by an authority, a user system 200 used by the user, and a usage object 300. When there are a plurality of users, the user system 200 may be configured to a smartphone owned by each user, or a shared terminal installed near the usage object 300 shared by multiple users.

Hereinafter, a configuration example of the usage assistance system 1 of the present invention is shown.

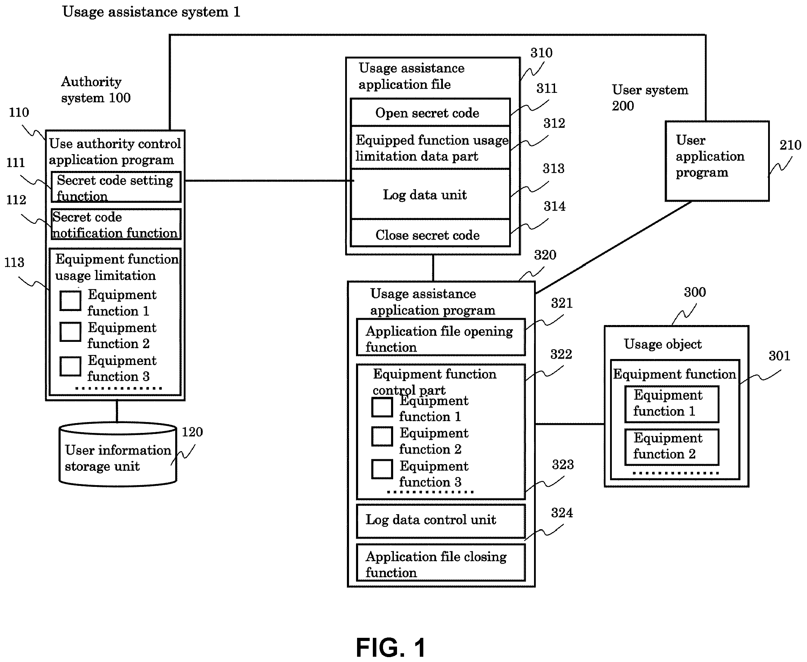

Fig.1 is drawing showing an example of a configuration of a usage assistance system 1 of the present invention according to Embodiment 1.

The usage object 300 may be various usage objects. For example, it may include tangible property of movables property or real estate, intangible property rights of data, ownership, virtual currency, or their parcels. The usage object is not only the entire usage object 300 but also a part of the usage unit. The usage unit can be various. For example, if the usage object 300 is a hotel, the usage unit may be a hotel room and common facilities in the hotel such as a swimming pool and a sports gym. If the usage object 300 is a train, the usage unit may include a driver's cabin, passenger seats, a service providing facility attached to the train, and the like. Further, if the usage object 300 is a data communication service, the usage unit may include a data communication capacity and usage time. Further, for example, if the usage object 300 is a haircut service of a famous hairdresser, the usage unit may be a time frame reservation of a famous hairdresser.

The equipment function 301 is an equipment function equipped by the usage object 300, and there may be various equipment functions depending on the usage object 300. If the usage object 300 is a train, it may have functions related to various equipment in the train, and if the usage object 300 is a data communication service, it may have a data communication function, a virus check function, and the like. If the usage object 300 is a haircut service of a famous hairdresser, there may be various equipment in the private room for use in the private room and aroma equipment during the treatment. In this way, there can be a wide variety of equipment functions.

The usage assistance application program 320 is an application program that supports and assists the use of the equipment function 301 equipped by the usage object.

The usage assistance application file 310 is a file used by the usage assistance application program 320.

The installation location of the usage assistance application program 320 and the usage assistance application file 310 may be incorporated in a part of the usage object 300, the user system 200 or the authority system 100 as long as the usage object 300 can be accessed. In the configuration example shown in Fig.1, it is assumed that the usage object 300 has a computer resource and the usage assistance application program 320 and the usage assistance application file 310 are incorporated in a part of the computer resource.

First, the usage assistance application file 310 is described.

In the configuration example shown in Fig.1, the usage assistance application file 310 includes an open secret code 311, an equipment function usage limitation data unit 312, a log data unit 313, and a close secret code 314.

The open secret code 311 is a secret code for opening the usage assistance application file 310. The user can normally open and access the usage assistance application file 310 by an application file opening function 321 described later by inputting the open secret code 311.

The close secret code 314 is a secret code for normally ending and closing the usage assistance application file 310. The user can normally finish and close the usage assistance application file 310 by the application file closing function 324 described later by inputting the close secret code 314.

For example, a PIN code and a text code such as numerals and characters can be adopted as the open secret code 311 and the close secret code 314.

For example, the ID code information stored in the IC card carried by the user can be adopted as the open secret code 311 or the close secret code 314.

Also, for example, the biological information of the user can be adopted as the open secret code 311 or the close secret code 314. The biological information may include a face image pattern, a fingerprint pattern, a vein pattern, an iris pattern, a voiceprint pattern, and the like.

In this example, the open secret code 311 and the close secret code 314 are described as biological information of the fingerprint pattern.

Although the open secret code 311 and the close secret code 314 are described as fingerprint patterns of the same finger, the open secret code 311 and the close secret code 314 may be used as different biological information.

The code input means can utilize various input devices such as an IC card reader, a biological information reading device or the like in addition to a general input device such as a keyboard, a touch panel, or the like in response to the open secret code 311 and the close secret code 314. According to the operation of the system, the input device to be equipped may be attached. When the biological information is adopted, the code input means is provided with a biological information pattern conversion means, extracts a feature amount from data such as a face image pattern, a fingerprint pattern, a vein pattern, an iris pattern, and a voiceprint pattern, performs a predetermined calculation expression or conversion processing of the feature quantity, and converts it into code information. The biological information pattern inputted by the authentic user may be converted into the correct open secret code and the correct close secret code

The equipment function usage limitation data unit 312 is a data portion for recording data related to the equipment function 301 of the usage object 300 or the restriction of the usage authority set for each of the usage ranges thereof. The equipment function usage limitation data itself is data set by the equipment function usage limitation part 113 equipped in the usage authority control application program 110 of the authority system 100 used by the authority. The equipment function usage limitation data is written by the usage authority control application program 110.
The content for which the usage authority can be set may differ depending on the function equipped by the usage object, and the range of use of the equipped function may be restricted separately. Examples will be described in Embodiment 3 and subsequent Embodiments. For example, if the usage category is a hotel guest room and a shared facility in the hotel, the user has the authority to use the sports gym as a shared facility in the hotel but does not have authority to use the pool. It is also possible to set for each facility that there is no usage authority for the hotel, and for each usage range that the TV installed in the guest room has the usage authority for terrestrial broadcast TV viewing but does not have the usage authority for pay cable TV viewing. It can also be set.

The log data unit 313 is a portion in which the usage assistance application file 310 records and holds the usage log data of the equipment function 301 of the usage object 300. The usage log data itself is log data collected from the equipment function 301 of the usage object 300 by the log data control function 323 equipped in the usage assistance application program 320 and is recorded by the log data control function 323 in the log data unit 313.

In this configuration example, the log data control function 323 records the log data in the log data unit 313 of the usage assistance application file 310, but another configuration that the log data control function 323 may temporarily store the log data can be possible. In this example, the usage assistance application program 320 does not include the log data unit 313.
In addition, another configuration that a distributed log data server cluster on the network is provided, and the log data control function 323 is recorded in the log data unit 313 as the closing process is executed by the application file closing function 324. By this configuration, the log data temporarily stored by the log data control function 323 to be transmitted to the authority system or the distributed log data server cluster on the network.

Next, the usage assistance application program 320 is described.

In the configuration shown in FIG. 1, the usage assistance application program 320 is provided with the application file opening function 321, the equipment function control part 322, the log data control function 323, and the application file closing function 324. In addition, a general application program operation function such as a general data browsing function, a data output function, a data editing function and a data storage function may be provided for operating the equipment function 301 of the object 300.

The application file opening function 321 is a process to be started by receiving the input of the open secret code to the usage assistance application file 310 and opens the usage assistance application file 310.

The opening processing in the application file opening function 321 is started when the open secret code is inputted from the user whose use authority is set.

The usage assistance application file 310 can be normally opened by establishing authentication in the application file opening function 321 on the basis of the open secret code inputted from the user.

The equipment function control unit 322 controls the availability of the equipment function 301 of the usage object 300 or the usage unit thereof according to the equipment function usage limitation data given to the equipment function usage limitation data unit 312. After all, the user can use the equipment function 301 that is set to be available but cannot use the equipment function 301 that is set to be unavailable.

The equipment function control unit 322 sends a control signal related to on/off control for each equipment function 301-1, 301-2, 301-3 ... equipped with the usage object 300, and limits the range of use. The equipment functions 301-1, 301-2, 301-3 ... are controlled based on these control signals.

The log data control function 323 collects the usage log data of the equipment function 301 of the usage object 300 and records the log data. The log data part 313 of the usage assistance application file 310, a storage part of the authority system 100, and a plurality of distributed log data server cluster provided on the network can be used as the recording destination of the log data. After recording in the log data unit 313, the log data may be transferred to the storage unit or the log data server cluster of the authority system 100.

The application file closing function 324 is a process that is activated by receiving the input of the closing secret code input from the user via the code input means for the usage assistance application file 310.
Here, the application file closing function 324 confirms and saves the usage log data recorded in the log data unit 313 through the use of the usage object 300 when the authentication of the closing secret code is established, and the usage assistance application file 310 terminates normally.

Next, the authority system 100 is described.

In the configuration shown in Fig.1, the authority system 100 is equipped with the use authority control application program 110 and is provided with the secret code setting function 111, a secret code notification function 112, and the equipment function usage limitation part 113.

The secret code setting function 111 sets the open secret code 311 and the close secret code 314 to the usage assistance application file 310.

The secret code notification function 112 notifies the user application program 210 of the user system 200 of the open secret code 311 and the close secret code 314 set by the secret code setting function 111. Upon receiving the notification of the open secret code 311 and the close secret code 314, the usage assistance system can execute the open process and the close process, and user can use the usage object 300.

The equipment function usage limitation part 113 sets the usage authority for the user for each equipment function 301 of the usage object 300 or the usage range thereof. The authority person may permit all the equipment functions 301 available when allowing the user to use the usage object 300, or the authority person may set limitting the usage authority in detail for each equipment functions 301 so that user can use some equipment functions 301 but cannot use rest equipment functions 301.

The user information storage unit 120 is a part that stores various information about the user. It may store the personal information of the user, but it may also simply store the usage log data and charge information.

Next, the user system 200 is described.

The user system 200 is equipped with the usage assistance application program 210 for using the equipment function 301 equipped in the usage object 300. It is a system used by a person who uses the usage object. For example, it may be a smartphone.

The code input means for the user to input the open secret code for opening the usage assistance application file 310 and the close secret code for closing may be equipped in a part of the usage object 300 or may be equipped in the user system 200.

The above is a brief description of the system configuration.

The usage assistance system 1 for the usage object has several patterns depending on the flow of setting the usage authority for the usage object 300, the method of setting the open secret code, the close secret code, and the like.

Here, two patterns are shown as specific examples.

### First pattern

In the first pattern, the open secret code and the close secret code are set by the secret code setting function 111, and the open secret code is set by the initiative from the usage authority control application program 110 side of the authority system 100. In this pattern, the set open secret code and the set close secret code are notified to the user application program 210 of the user system 200 by the secret code notification function 112.

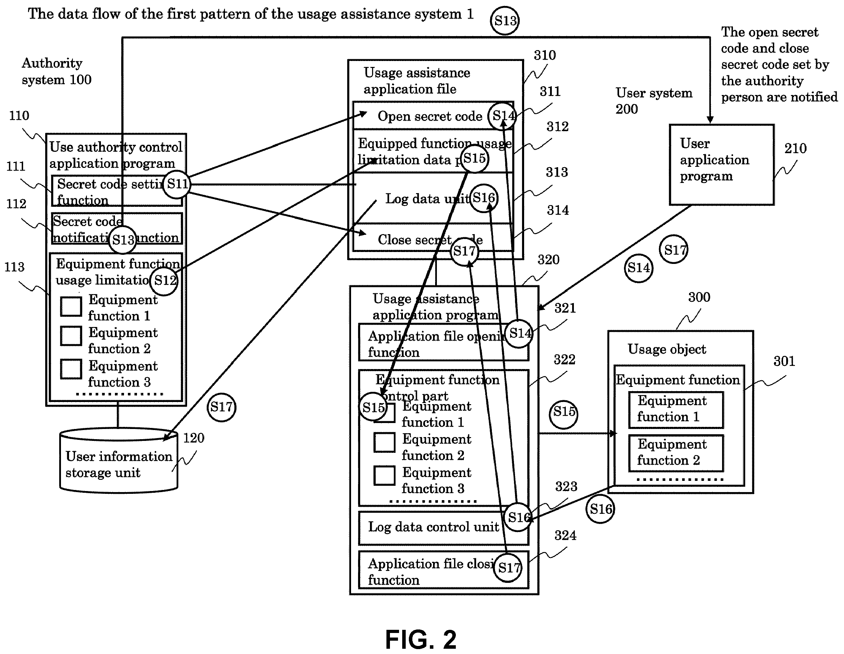

FIG. 2 is drawing showing an outline of the flow of authority setting of the usage object 300 in the usage assistance system 1 of the usage object according to the first pattern. It shows the image of the exchange of temporary grant of usage authority and return of usage authority.

The authority person once opens the usage assistance application file 310 with the current open secret code by the secret code setting function 111 and creates the current open secret code and the current close secret code to identify the user. It is rewritten and set with the close secret code (step S11 in FIG. 2), the equipment function usage limitation data is also set (step S12 in FIG. 2), and then closed once with the close secret code.
The open secret code and the close secret code that identify the user may be created from the user information or may be a one-time disposable secret code such as a one-time password.

The open secret code and the close secret code are notified to the user system 200 by the secret code notification function 112 (step S13 in Fig.2). The user who has been notified of the open secret code and the close secret code can use the usage object 300. In other words, it is possible to virtually lend only to users who have received usage authority settings. If the user opens the usage assistance application file 310 by inputting the open secret code (step S14 in Fig.2) and starts using the equipment function 301 of the usage object 300, the usage log data is collected via the log data control function 323. Recording becomes possible (Fig.2, step S15).

When the user finishes using the usage object 300, the application file closing function 324 is activated by inputting the closing secret code, and the usage log recording in the log data unit 313 is finished and confirmed (FIG. 2, step S16). When the usage assistance application file 310 ends and closed normally (step S17 in FIG. 2), the recorded and accumulated log data is transmitted to the authority system 100 or the distributed data server cluster on the network, and the usage authority is returned.

### Second pattern

In the second pattern, the open secret code and the close secret code are set by the secret code setting function 111, and the open secret code is set by the usage authority control application program 110 of the authority system 100 according to the request from the user system 200. The granting of usage authority is set at the initiative of the user system side, and the authority system responds to the request. This second pattern in which an open secret code and a close secret code are set by the above method, and the set open secret code and the close secret code are notified to the user application program 210 of the user system 200 by the secret code notification function 112.

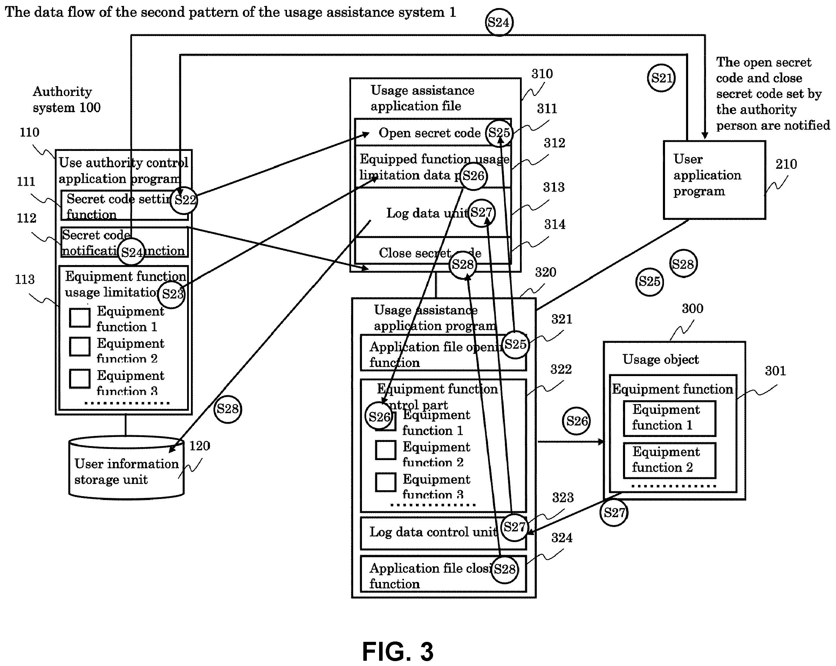

FIG. 3 is a drawing showing the flow of authority setting of the use object 300 in the usage assistance system 1 of the use object related to the second pattern. It shows the image of the exchange of temporary grant of usage authority and return of usage authority.

The user system 200 transmits request information to request the application program of the use authority to the use authority control application program 110 side of the authority system 100 from the user system 200 (FIG. 3 step S21). The authority system receives the request information, temporarily opens the usage assistance application file 310 by the current open secret code by the secret code setting function 111 and stores the default current open secret code and the default current close secret code. A new open secret code and a close secret code prepared so as to specify the user are rewritten and set (step S22). The equipment function usage limitation data is also set (step S23) and then once closed by a close secret code.

The rewritten open secret code and the rewritten close secret code for specifying the user may be prepared from the user information, and it may be a disposable secret code only once, such as a one-time secret code.

The secret code notification function 112 of the authority system 100 notifies the user system 200 of the rewritten open secret code and the rewritten close secret code (step S24 in FIG.3).

If the user opens the usage assistance application file 310 by inputting the open secret code (step S25 in FIG.3) and starts using the equipment function 301 of the usage object 300, the usage log data is collected via the log data control function 323. Recording becomes possible (step S26 in FIG.3).

When the user finishes using the usage object 300, the application file closing function 324 is activated by inputting the close secret code, and the usage log recording in the log data unit 313 is finished and confirmed (step S27 in FIG. 3). When the usage assistance application file 310 ends and closes normally (step S28 in FIG. 3), the recorded and accumulated log data is transmitted to the authority system 100 or the distributed data server cluster on the network, and the usage authority is returned.

As described above, according to the usage assistance system of the present invention, it is possible to operate the usage object by temporarily giving the usage authority to a specified or unspecified number of users and giving approval for the usage content. Usage data can be collected in the form of usage logs.

### Embodiment 2

Embodiment 2 assumes a plurality of users, and a plurality sets of open secret codes and close secret codes are set, and different set of open secret code and close secret code is allotted to each user.

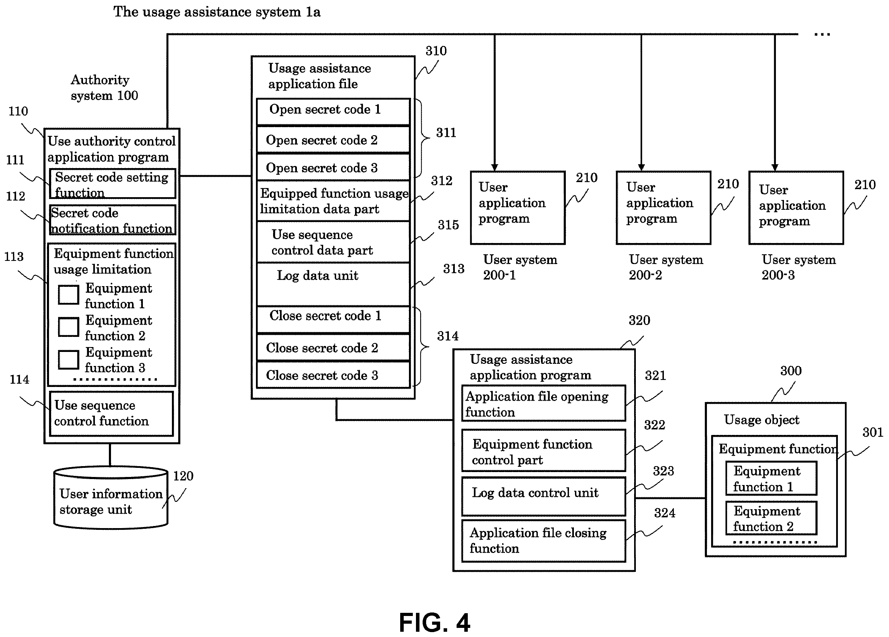

FIG. 4 is a drawing simply showing a configuration example of the usage assistance system 1a according to the Embodiment 2.

As a basic configuration, the usage assistance system 1 to be used according to Embodiment 2 includes the authority system 100, the user system 200, and the usage object 300 the same as in Embodiment 1. In this example, there are a plurality of users, and as an example, a case where there are three users who simultaneously share or serially use the same usage object 300 is shown. The user system 200 may be configured to exist for each user like a smartphone owned by the user himself, or the user system 200 may be common terminal shared by these users such as a shared terminal installed near the usage object 300.

The usage assistance application file 310 comprises the open secret code 311, the equipment function usage limitation data part 312, the log data part 313, the close secret code 314, and the use sequence control data part 315.

The open secret code 311 and the close secret code 314 are similar to Embodiment 1, but in this Embodiment 2, a set of open secret code 311 and close secret code 314 is set as one set, and a plurality of sets are provided. In this example, a set of the open secret code 1 and the close secret code 1, a set of the open secret code 2 and the close secret code 2, a set of the open secret code 3 the close secret code 3 are provided.

The open secret code 1 and the close secret code 1 are assigned to the user 1, the open secret code 2 and the close secret code 2 are assigned to the user 2, and the open secret code 3 and the close secret code 3 are assigned to the user 3. That is, the set of one set of open secret code 311 and the close secret code 314 corresponds to one specific user.

The equipment function usage limitation data part 312 and the log data part 313 are similar to those of Embodiment 1.

The usage sequence control data unit 315 controls the activation order in which the application file opening function 321 and the application file closing function 324 can be activated for each set of the open secret code 311 and the close secret code 314 in the usage assistance application file 310. This is the part where the sequence control data is described. As the usage sequence order, there is two types, the one is an exclusive usage sequence order that does not allow shared use by a plurality of users, and the other is a non-exclusive usage sequence order that allows shared use by a plurality of users.

As an exclusive sequence order, for example, the activation order of the application file opening function 321 and the application file closing function 324 is described as (open secret code 1 and close secret code 1) → (open secret code 2 and close secret code 2) → (open secret code 3 and close secret code 3).

If the usage sequence order is described as above, the application file opening function 321 cannot accept the open secret code 2 even if the user 2 first inputs the open secret code 2. When the usage sequence order given to the control data unit 315, it does not match the normal usage sequence order, so the open process is not executed.

As the non-exclusive usage sequence order, for example, the activation order of the application file opening function 321 and the application file closing function 324 is described as (the open secret code 1, the close secret code 1, the open secret code 2, and close secret code 2, these are written together) → (open secret code 3 and close secret code 3). If the open secret code 2 is input by the user 2 first, the application file opening function 321 refers to the usage sequence order given to the usage sequence control data unit 315, and since it matches the normal usage sequence order, the open process is executed.

By providing the usage sequence control data unit 315 in this way, it is possible to control the usage by a plurality of users.

The usage assistance application program 320 is equipped with the application file opening function 321, the equipment function control part 322, the log data control function 323, and the application file closing function 324, and it may be equipped with a general application program operation function such as a general data browsing function, a data output function, a data editing function, and a data storage function in operating the equipment function 301 of the object 300.

Although these are the same as those shown in Example 1, the application file opening function 321 and the application file closing function 324 refer to the use sequence control data and execute the authentication processing of the open secret code and the close secret code according to the activation order.

The authority system 100 is equipped with the use authority control application program 110 and is equipped with the use sequence control function 114 in addition to the secret code setting function 111, the secret code notification function 112, and the equipment function usage limitation part 113 in the configuration shown in FIG.4.

Among these configurations, the secret code setting function 111, the secret code notification function 112, and the equipment function usage limitation part 113 may be the same as Embodiment 1.

The usage sequence control function 114 is a function of writing usage sequence control data to the usage sequence control data unit 315 of the usage assistance application file 310. According to the usage sequence determined by the authority person, the usage sequence control function 114 converts the usage sequence control data into usage sequence control data and writes the usage sequence control data unit 315.

In this way, by giving the usage sequence control data, the application file opening function 321 and the application file closing function 324 of the usage assistance application program 320 are opened and closed in the activation order according to the usage sequence control data. Authentication process is executed.

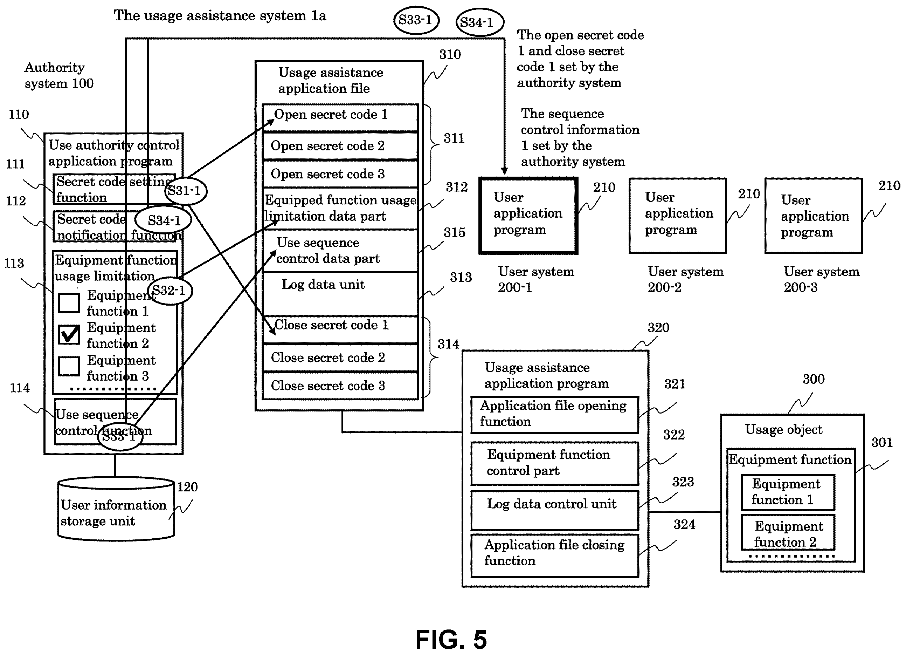

Fig.5 to Fig.8 are drawings briefly showing a part of the processing flow of the usage assistance system 1a according to Embodiment 2.

FIG. 5 is a drawing showing a flow of setting the open secret code 1, the close secret code 1 and the usage sequence control data for the user system 200-1 of the user 1.

In the following, the setting of the open secret code and the close secret code by the initiative from the usage authority control application program 110 side of the authority system 100 shown in Embodiment 1 is described as an example.

The authority person once opens the usage assistance application program 310 by the current open secret code by the secret code setting function 111, rewrites the current open secret code and the current close secret code to a new open secret code 1 and a close secret code 1 created to specify the user 1 (step S31-1), and sets the equipment function usage limitation data (step S32-1). The open secret code and the close secret code for specifying the user may be prepared from the user information, and it may be a disposable secret code only once, such as a one-time secret code.

The usage sequence control function 114 registers the usage sequence control data unit 315 of the usage assistance application file 310 as the first in the usage sequence order (step S33-1 in FIG. 5).

The open secret code and the close secret code are notified to the user system 200-1 of the user 1 by the secret code notification function 112, and the usage sequence is also notified (FIG. 5, step S34-1).

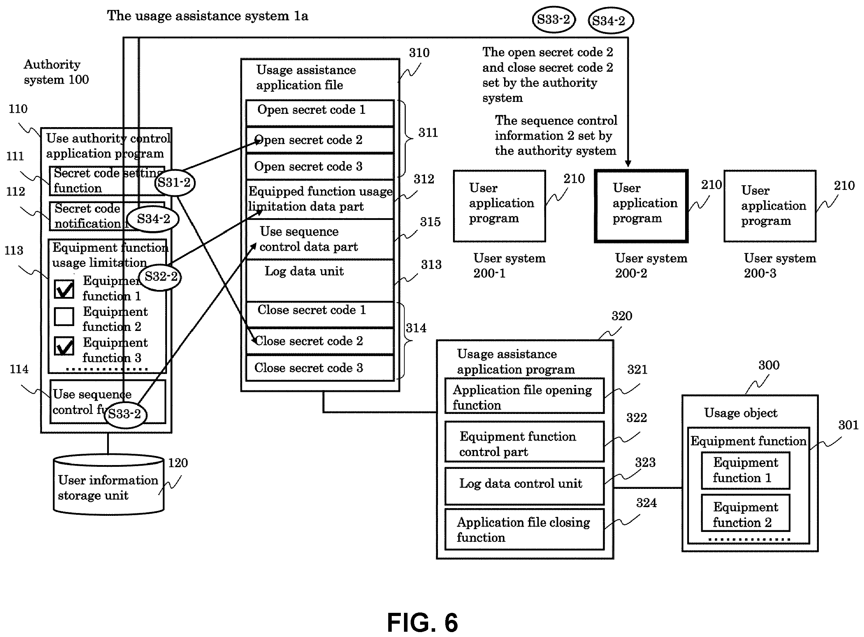

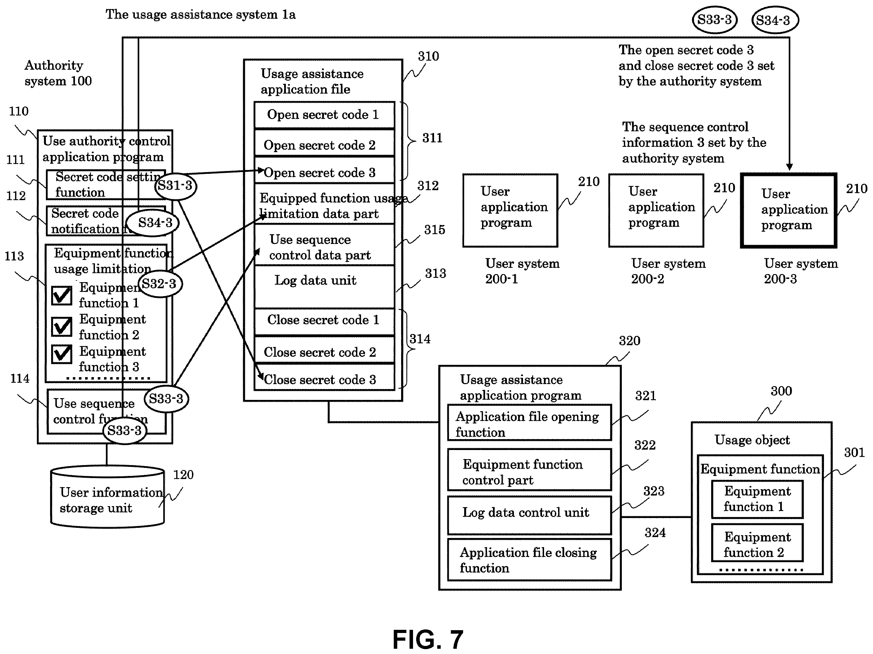

Similarly, as shown in FIGS. 6 and 7, the open secret code 2 and the close secret code 2 for the user system 200-2 of the user 2 and the open secret code and the close secret code 3 for the user system 200-3 of the user 3 are set.

After that, the usage assistance application program 310 is closed once with the close secret code.

Next, a part of the flow of use by each user is described.

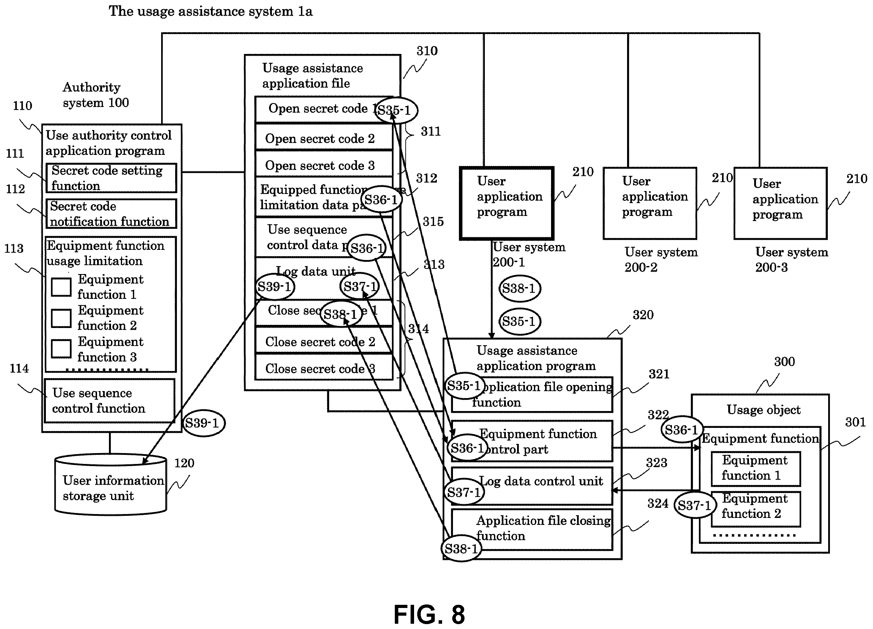

If the user 1 opens the usage assistance application file 310 by inputting the open secret code 1 (step S35-1 in FIG. 8) and starts using the equipment function 301 of the usage object 300 (step S36-1 in FIG. 8), the use log data can be collected and recorded through the log data control function 323 (step S37-1 in FIG. 8).

When the user finishes using the usage object 300, the application file closing function 324 is activated by inputting the close secret code 1, the usage log recording in the log data unit 313 is completed and confirmed, and the usage assistance application file is confirmed. When usage assistance application file 310 ends and closes normally (step S38-1 in FIG. 8), the recorded and accumulated log data is transmitted to the authority system 100 or distributed data server cluster on the network (step S39-1 in FIG. 8), and the usage authority is returned.

Next, as in the flow of FIG. 8, the user 2 opens the usage assistance application file 310 by inputting the open secret code 2 and uses the equipment function of the usage object 300. After that, the process is executed for the user 3 in the same flow as in FIG.8.

The collected usage log data is transmitted to the authority system 100. By setting a plurality of sets of the open secret code and the close secret code in this way, it is possible for a plurality of users to use the usage object.

### Embodiment 3

The Embodiment 3 is an example of configuring a usage authority chain in which the usage authority is linked by operating a user application program by a user who has set the use authority and setting an open secret code and a close secret code for taking over to the next user.

As Embodiment 1 describes the pattern that the user is specified by the intention of the authority person via the authority system 100. The open secret code and the close secret code are set by the authority person intentionally and these are notified to the user as shown in Fig.2. As Embodiment 2 describes the pattern that the user is specified by the intention of the authority person as the corresponding result on the basis of the request from the user side and these are notified to the user as shown in Fig.3. However, this Embodiment 3 takes over the use authority of the object 300 to be used in a form that the user specifies the next user. For example, virtual currency data or the like can be successively taken over one after another.

Three patterns are given as an example for configuring a usage authority chain.

In the first pattern of the usage authority chain of , only the open secret code is rewritten by the current user and updated so that the user specifies the next user, and the updated open secret code and the close secret code inherited from the previous user are sent to the next user. It is a type that inherits the close secret code inherited from the previous user (that is, the authority system 100 can perform the confirmation process of the transfer to the next user).

In the second pattern of the usage authority chain, only the open secret code is rewritten by the current user and updated open secret code is handed to the next user in the form of designation. Only the updated open secret code is inherited by the next user. This is a type in which the authority system 100 performs the input of the close secret code and the close process (that is, the confirmation of handing over process to the next user).

The third pattern of the usage authority chain, both the open secret code and the close secret code are rewritten by the current user and updated open secret code and updated close secret code are handed to the next user in the form of designation.

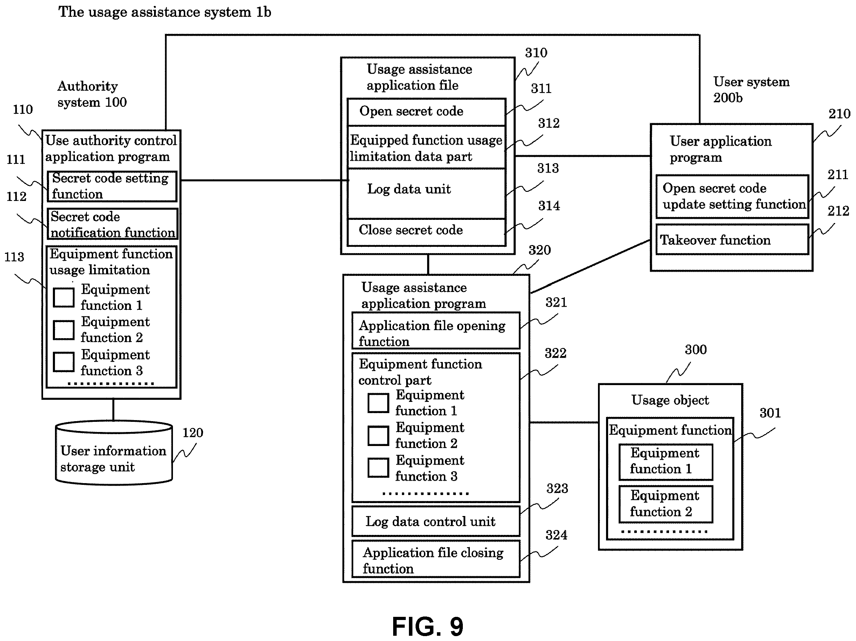

FIG. 9 is a drawing schematically showing a configuration example of the usage assistance system 1b according to Embodiment 3 and corresponds to the first pattern of the use authority chain of the second pattern of the usage authority chain.

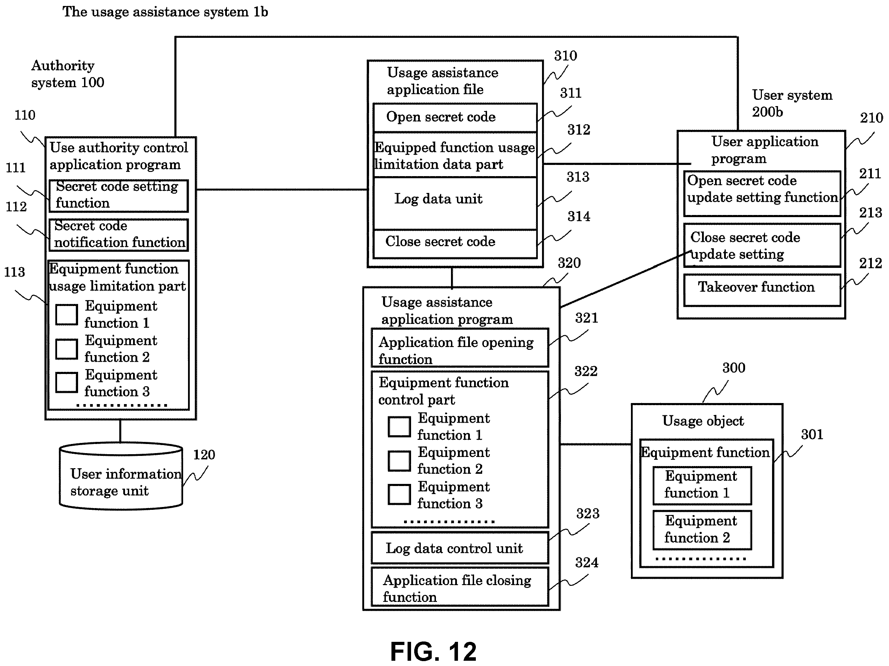

FIG. 12 is a drawing schematically showing another configuration example of the usage assistance system 1b according to Embodiment 3 and corresponds to the third pattern of the usage authority chain.

As a basic configuration, the usage assistance system 1b according to Embodiment 3 is the same as shown in Example 1, there are the authority system 100, the user system 200b, and the use object 300. These control the usage assistance application file 310 and the usage assistance application program 320, and the components except for the user system 200b may be the same as shown in Example 1.

In the example shown in FIG. 9, the user system 200b is provided with an open secret code update setting function 211 and a takeover function 212. In the example of FIG. 12, the user system 200b is provided with an open secret code update setting function 211, a close secret code update setting function 213 and a takeover function 212.

The open secret code update setting function 211 sets an open secret code for taking over to the next user by the current user who uses the user system 200b and is a function of rewriting and updating the open secret code 311 in the usage assistance application file 310.

The close secret code update setting function 213 sets a close secret code for taking over to the next user by the current user who uses the user system 200b and is a function of rewriting and updating the close secret code 314 in the usage assistance application file 310.

The takeover function 212 notifies only the open secret code for takeover or both the open secret code and close secret code for taking over to the user application program 200b used by the next user.

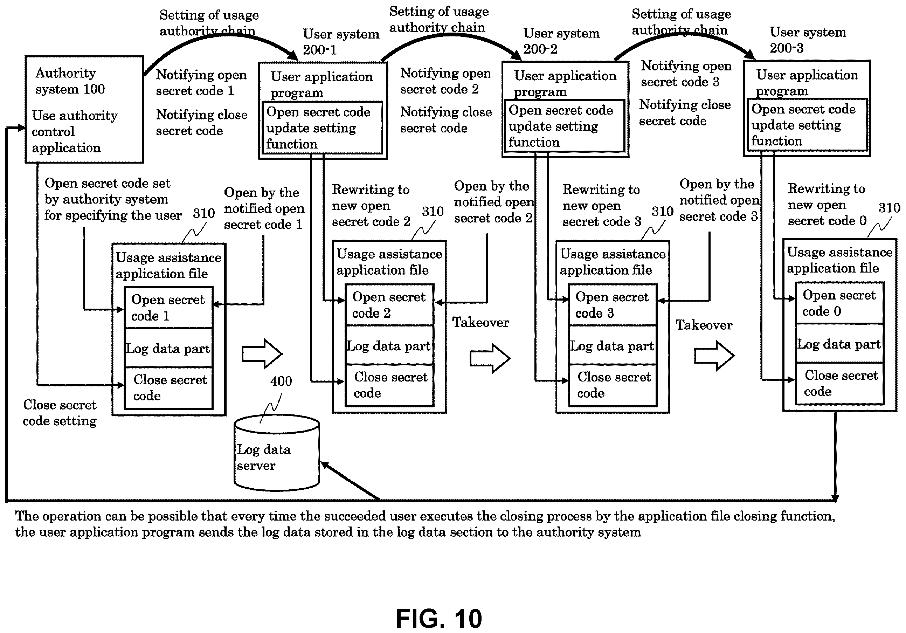

FIG. 10 is a drawing showing the flow of data of the usage authority chain of the first pattern in a simple manner. The authority system 100 sets the current open secret code to the open secret code 1 to be given to the user 1 by the secret code setting function 111, and the close secret code remains in the current close secret code and notifies the user system 200-1 of the user 1 by the secret code notification function 112.

The user 1 inputs the open secret code 1 to the usage assistance application file 310 and uses the usage assistance application file 310. When finish the usage, the open secret code update setting function 211 updates the open secret code 2 by the open secret code update setting function 211 in the form of designating the next user 2 and the close secret code remains as the current close secret code. These open secret code and the close secret code are notified to the next user system 200-2 of the user 2 by the takeover function 212, and the close secret code is inputted to terminate the current use of the current user to take over the next user 2.

In this way, the usage authority chain is connected to the user 2 and the user 3 one after another, and the use of the use object 300 is supported.

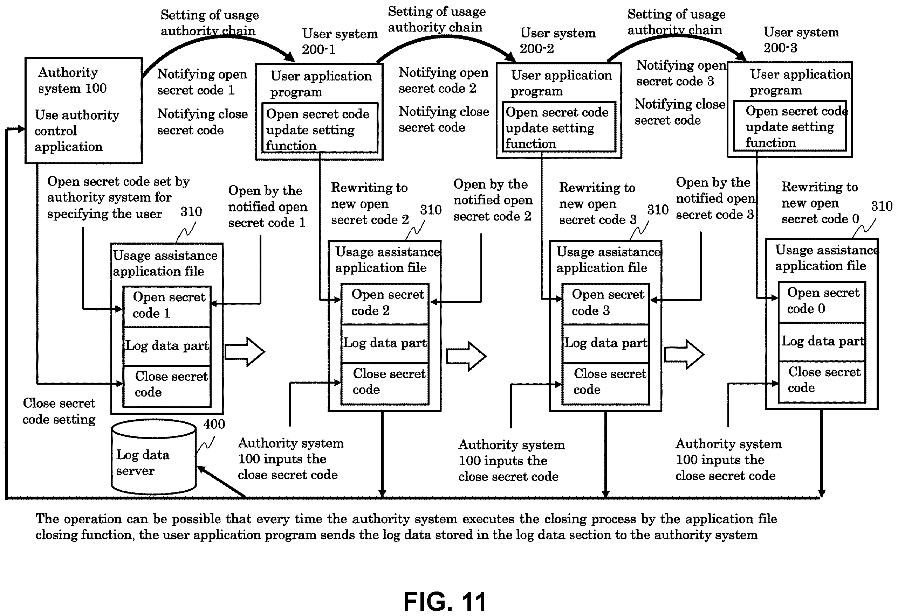

FIG. 11 is a drawing briefly showing the data flow of the usage authority chain of the second pattern. The authority system 100 sets the current open secret code to the open secret code 1 which is given to the user 1 by the secret code setting function 111, keeps the close secret code as the current close secret code, and open secret code 1 and close secret code are notified by the secret code notification function 112. Only the open secret code 1 is notified to the user system 200-1 of the user 1.

The user 1 inputs the open secret code 1 and opens the usage assistance application file 310, uses the use object 300, updates the current open secret code 1 to the open secret code 2 by the open secret code update setting function 211 in the form of designating the next user 2, and notifies the user system 200-2 of the user 2 by the takeover function 212. At the closing processing, the authority system 100 inputs the close secret code by, temporarily ends the use of the usage object, and waits for the input of the open secret code 2 from the next user 2. Thus, by inputting the close secret code by the authority system 100, the use end of the usage object of the user 1 and the information of the specified next user 2 can be obtained, and the connection of the usage authority chain can be grasped. In this way, the usage authority chain is connected to the user 2 and the user 3 one after another, and the use of the use object 300 is supported.

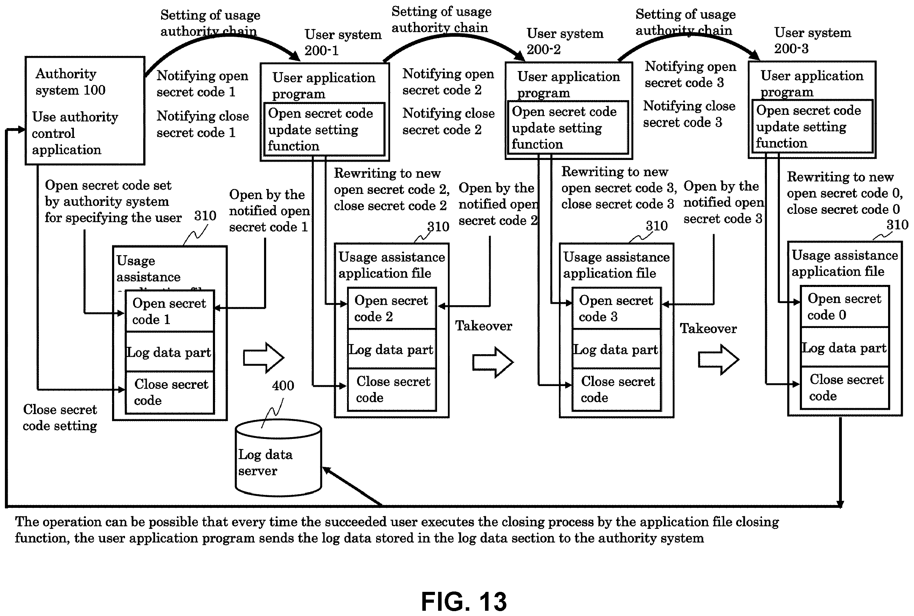

FIG. 13 is a drawing for easily showing the data flow of the usage authority chain of the third pattern. The authority system 100 sets the current open secret code as the open secret code 1 given to the user 1 by the secret code setting function 111, sets the close secret code to the close secret code 1 given to the user 1, and notifies the user system 200-1 of the user 1 both of the open secret code 1 and the close secret code 1 by the secret code notification function 112.

The user 1 inputs the open secret code 1 to open the usage assistance application file 310, uses the usage object 300, and when the use is completed, designates the next user 2 to specify the open secret code. The update setting function 211 rewrites and updates to the open secret code 2, the close secret code update setting function 213 rewrites and updates to the close secret code 2, and the takeover function 212 notifies the open secret code 2 and the close secret code 2 to the user 2. By notifying the user system 200-2 and inputting the updated close secret code 2, the use of the user 1 is terminated.

In this way, the usage authority chain is connected to the user 2 and the user 3 one after another, and the usage of the usage object 300 is supported.

The usage log data can be configured to be stored in the authority system 100 or the log data server cluster 400.

### Embodiment 4

Example 4 is an example of a case in which charging processing is linked with payment processing of a financial institution.

In the configuration shown in Example 1 from Example 3, it is assumed that charging is generated for the use of the usage object 300, and the charge payment processing or the like can be assumed according to the use content. Here, the usage assistance system 1 will be described as an example in which the charging processing is linked with the payment processing system of the financial institution.

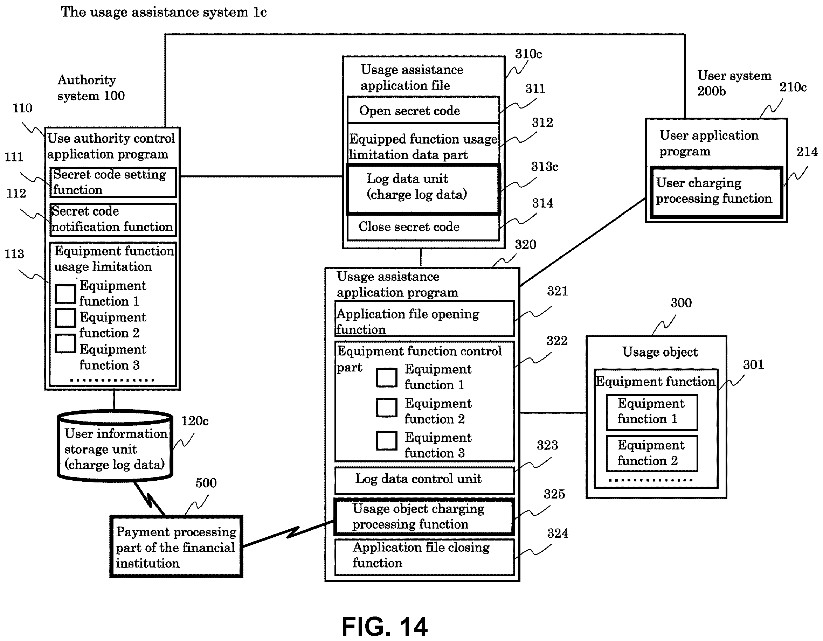

As the basic constitution, the usage assistance system 1c according to Embodiment 4 comprises the authority system 100c, the user system 200c, and the use object 300, and controls the usage assistance application file 310c and the usage assistance application program 320c, and components related to charging processing and payment processing are added. In Example 4 of FIG. 14, a payment processing part 500 managed by a financial institution is linked.

The user application program 210c is provided with a user charging processing function 214, and the user holds information on a payment means such as credit card information or debit card information when the user starts to use by using the usage assistance application program 320c.

Prior to the use authority setting, the holding of the credit information or the like of the user is confirmed through the user charging processing function 214.

Further, for example, the open secret code and the close secret code can be a combination of credit card information or debit card information of the user and user's biological information.

The usage assistance application program 320c is provided with an application file opening function 321, an equipment function control part 322, a log data control function 323, and an application file closing function 324, and a usage object charging processing function 325.

The usage object charging processing function 325 performs charging processing according to the use state of the equipment function 301, calculates a charging amount according to the use content of the equipment function 301 of the user on the basis of a charging rule determined for the operation of the usage object 300 and the equipment function 301, determines a charging amount, and records charging data in the log data part 313c of the usage assistance application file 310c.

The log data part 313c of the usage assistance application file 310c holds the use log data as described in Example 1, but the charging log data is also recorded in this case.

Also, charging log data is stored in the user information storage part 120c of the authority system 100.

The usage object charging processing function 325 requests credit payment or debit payment to the payment processing system 500 managed by a financial institution on the basis of credit information or debit information of the user notified via the user charging processing function 214 and executes payment processing. The result of the payment processing is reported to the usage object charging processing function 325, recorded in the log data part 313c, and reported to the user information storage part 120c.

Thus, the user charging processing function 214 of the user system 200c, the use object charging processing function 325 of the usage assistance application program 320c, the log data part 313C of the usage assistance application file 310C, and the payment processing system 500 of the financial institution are linked, and the payment of charging contents corresponding to the use contents of the use object 300 is executed.

### Embodiment 5

Embodiment 5 and subsequent embodiments will explain examples applied to support the usage of various usage objects and equipment functions. Although some specific examples will be described in Embodiment 5 and subsequent embodiments, the present invention is not limited to the specific examples, and various application program configurations may be possible.

The configuration example itself of the use support system 1 of the present invention according to Embodiment 5 may be the configuration example shown in the Embodiment 1 to Embodiment 4. There are various usage objects 300, and there are also various equipment functions 301.

As an application program example of the configuration shown in Example 1, the usage assistance system 1 is applied to a mobile system including a railway vehicle, an aircraft, a ship, a passenger car vehicle, and a cargo vehicle. The use unit is a seat, a passenger compartment or a shared facility of the mobile body, and the authority person is an operator of the mobile body, and the user is an example in which the user uses the mobile body. For example, according to the flow shown in FIG. 3 of Example 1, the type requesting the usage authority setting from the user system 200 is applied to a reservation system for designating and reserving the type to be used for the equipment function 301 of the mobile body.

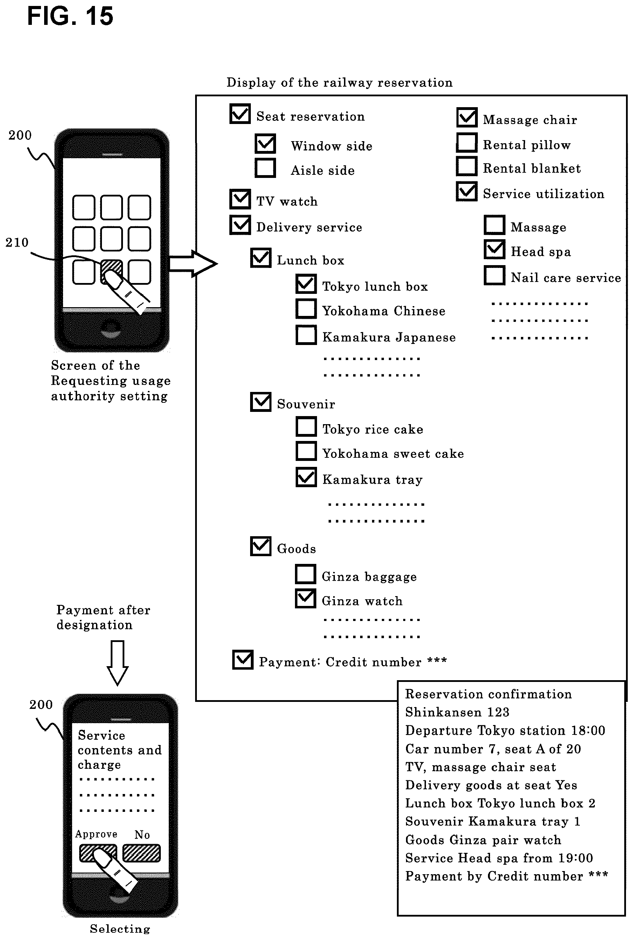

FIG. 15 is a drawing showing a designation screen of the equipment function 301 when the usage assistance system 1 of a use object according to the present invention is applied to a mobile body system. For example, a case where a railway seat and a shared facility such as a Shinkansen (new trunk line: Japanese high-speed railway) or a luxury special railway are used as the use unit will be described.

In the example shown in FIG. 15, a list of equipment functions 301 which can be provided by installing a train number, its seat and a shared facility is presented on a monitor of the user system 200. A reservation processing function of the seat, the passenger compartment or the shared facility, a use control function of various devices installed in the seat, the passenger compartment or the shared facility, a delivery service use function of an article to be a reception destination of the seat, the passenger compartment or the shared facility, a communication service use function of data using the seat, the passenger compartment or the shared facility as a reception destination, a function to process usage charges for the seat, the passenger compartment or the shared facility, and the like are provided. The usage authority setting request information is transmitted to the equipment function usage limitation part 113 of the authority system 100 as the use authority setting request information by checking the check box with respect to the user requesting the usage authority setting from the list.

In the example of FIG. 15, there are items such as reservation processing of the seat, use of a TV installed in the seat, use of delivery service of articles to be received by the seat, rental pillow use, rental eye mask use, massage service use, etc. and various kinds of items are included as articles of delivery service, and there are categories such as lunch, soil production, select shop merchandise and the like.

For example, for the reservation of the seat, there are not only a window side and a passage side but also a seat equipped with a different specification. Therefore, a special seat equipped with a TV, a special seat (a seat with a structure in which a seat is provided at the tail end and can be operated by a massage agent), etc. can be selected based on the presence/absence of service use.

For the use of a TV mounted on the seat, it is necessary to make a reservation of the seat when only a part of the seat is installed, and when the seat is installed in all the seats, viewing by the toll charging can be performed.

The use of delivery services for goods that receive seats is a convenient function for passengers. Conventionally, the types of lunch boxes sold in the car are limited as the lunch boxes to be eaten in the car. In addition, when purchasing at a shop inside a station, it is difficult to purchase at a store inside a vast station, and it is inconvenient to carry. The same applies to souvenirs. In addition, the conventional general home delivery service is only for pick-up at private homes or designated buildings, and there is no delivery service for seats. According to the usage assistance system 1 to be used according to the present invention, it is possible to provide a delivery service for goods whose seats are to be received, and a railway company or affiliated company can set up a distribution center at a terminal station of a railway line or a part of a railway line. It is possible to efficiently prepare for delivery by installing it, securing inventory of lunch boxes, souvenirs, select shop products, etc., and based on the seat information of the delivery destination. Businesses that have sold a variety of products in the station premises are also preferable if they consider that the sales form of the products will switch from face-to-face sales at stores to inventories at distribution centers or on-demand delivery.

Of course, it is also possible to use the conventional technology and future technology known in the distribution system. For example, it is a technique of attaching a wireless IC chip to an article package or the like to check the stocked products.

If there is an order before a predetermined time of departure of the train, the delivery service of the article can be carried out without difficulty, if the train is carried to the train by being packed together for each of the delivery bags sorted for each seat, and the in-vehicle salesperson can deliver to the seat. To solve the problem that convenience is enhanced for any passenger, railroad company, and existing article sales company, and the service use unit price of a passenger can also be improved, since it is possible to easily deliver his/her favorite lunch and soil production to the seat even for passengers who have not actively utilize the in-vehicle sales service.

A massage service can be used instead of delivery of the article. In the case of a massage service requiring arrangement of the service operator, a prescribed time such as 40 minutes, 1 hour, 1 hour 30 min, etc. is used as a massage service unit as a usage time, and a necessary number of massage persons etc. are arranged in accordance with the request number of service in the train, and the service shift of the massage through the upstream train and the down train is combined, so that the user and the service provider can be provided without waste.

### Embodiment 6

Embodiment 6 is an example applied to a mobile system including a railway vehicle, an aircraft, a ship, a passenger vehicle, and a cargo vehicle, and applied to a driving room for a mobile body as a use unit. The authority person is an operator of the mobile body, and the user is a driver or an operation responsible person of the mobile body. That is, this example is not to use the usage object as a customer but is a usage assistance system for operating the usage object on the basis of the business instruction.

For example, according to the flow shown in FIG. 2 of Embodiment 1, a type specifying a user (driver) from the authority system 100 is applied to the driving support system of the mobile body.

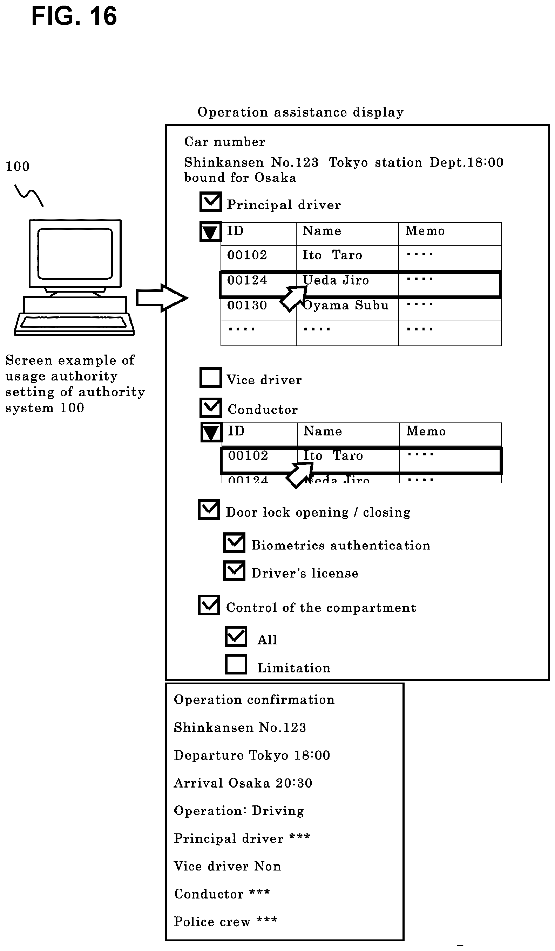

FIG. 16 is a drawing showing a designation screen of the equipment function 301 of a train driver's seat in an operation management operation center terminal when the usage assistance system 1 according to the present invention is applied to a driving support system of the mobile body. For example, a case where a driver's seat of a railway of a Shinkansen (new trunk line: Japanese high-speed railway) is described.

FIG. 16 shows an example of a designation screen in which a train number, a destination, a departure time, and the like are displayed in an easy-to-understand manner on the monitor of the authority system 100 such as an operation management operation center terminal. An operation manager, who is an authority person, performs the use authority setting, that is, the operation authority setting. In this example, the operation manager sets the operation authority by checking the check box by the operation manager in the operation of the authority system 100, and inputs it to the equipment function usage limitation part 113.

In the example of FIG. 16, an example of a setting screen of use authority related to a Shinkansen (new trunk line: Japanese high-speed railway) operation in the operation center is shown. For example, when a check is made to the check column of the principal driver, a driver list is indicated by a pull-down menu, and a driver who gives the operation authority of Shinkansen (new trunk line: Japanese high-speed railway) to be a designated principal driver. If the check column is not checked in the same way for the vice driver, the vice driver is not specified. The operation qualification confirmation of the principal driver for operating door lock opening and closing function of the driving operation room door by the biological information as the person authentication. For example, the driving operation room door is equipped with a fingerprint authentication device and a card reader of a driver's license IC card. Further, a control function of various kinds of driving operation equipment installed in the driving operation room, equipment relating to the environment in the driving operation room and equipment related to the environment of the train other than the driving operation room (passenger compartment) of the train can be controlled.

In the above configuration, the usage object is a train, an authority person is a railroad service company such as JR (Japan Railway Company), and a designated user who is set the usage authority can be a principal driver or a conductor in the railway vehicle.

For example, the usage object is a night bus or a sightseeing bus, an authority person is a passenger company such as a bus company, and a designated user who is set the usage authority can be a bus driver and a bus guide. It is possible to clearly manage the driver who has become a problem in recent years, and it is possible to avoid the driver from becoming a designated driver in a long-time labor state.

When the usage object is a long-distance track or a delivery track, the authority person is a logistic company such as a transportation company, and the user who is set the usage authority can be a driver of a track. It is possible to clearly manage the driver who has become a problem in recent years, and it is possible to avoid the driver from becoming a driver in a long-time labor state.

### Embodiment 7

Embodiment 7 is an example in which the usage assistance system 1 according to the present invention is applied to a rental service of a usage article. As an example of a rental article, a rental car is explained, and as a use unit, a driver's seat of the rental vehicle is explained. The authority person is a rental car operator or a manager, and the user rent a rental car.

For example, according to the flow shown in FIG. 3 of Example 1, the type of requesting the usage of the rental car from the user system 200 is applied to the reservation system for designating and reserving one of the equipment functions 301 for the rental service.

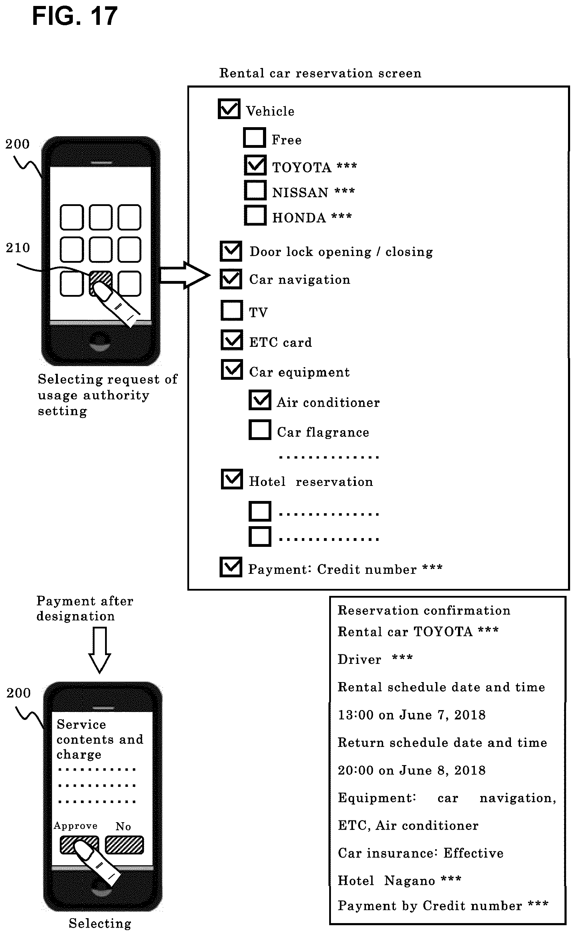

FIG. 17 is a drawing showing a designation screen of a rental car and the equipment function 301 when the usage assistance system 1 of the usage object according to the present invention is applied to a reservation system of a rental car.

In the example of FIG. 17, on the monitor of the user system 200 (such as a smart phone held by the user), a rental car type, an accessory, a usage fee, etc. are displayed in an easy-to-understand manner. The use authority setting request information is transmitted to the equipment function usage limitation part 113 of the authority as use authority setting request information by checking the check box so as to request the use authority setting or operation authority setting by the user.

In the example of FIG. 17, the rental car reservation processing function, the door lock opening/closing function of the vehicle, the control function of various devices such as car navigation and on-vehicle TV installed in the vehicle, and the control function of various kinds of equipment relating to the in-vehicle environment such as temperature and odor in the vehicle are included. Also, the accompanying service can also set the use authority. For example, the reservation of the hotel at the destination can be set. For example, it can be handled by linked with a hotel reservation site.

Here, the usage assistance system 1 of the usage object of the embodiment 4 accompanied by charging processing is assumed to be employed, and the use charging processing function of the rental car is employed.

Although the rental article is a vehicle in the above example, it is possible to apply the rental article in the same way taking into consideration the function of the rental article and the function of the rental article.

### Embodiment 8

Embodiment 8 is an example applied to a real estate system including a house, an apartment house, a condominium, and a building, and the use unit is a real estate ownership section, a rental section, or a shared facility. The authority person is the owner of the real estate, the rental section or the shared facility operator, and the user uses the owner section of the real estate, the rental section, or the shared facility.

The use period may be set in a long term for several years, such as a house rental property, and may be set in a short term for few weeks such as a so-called weekly rental condominium.

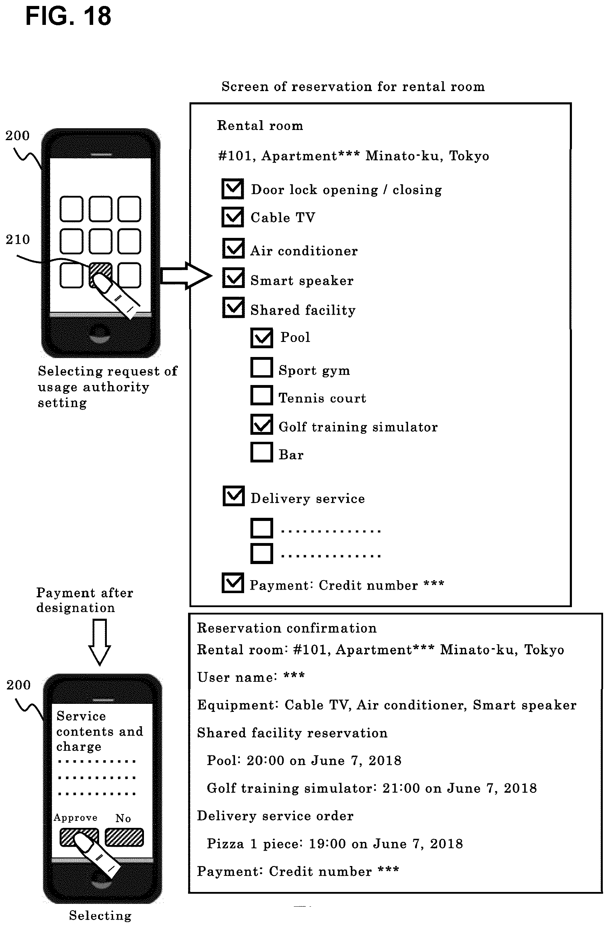

FIG. 18 is a drawing showing a designation screen of the equipment function 301 of real estate when the usage assistance system 1 of the usage object according to the present invention is applied to a real estate system. For example, the case of using one room of a condominium and its shared facility as the use unit will be described.

In the example of FIG. 18, a door lock opening/closing function of a room of a condominium, a door lock opening/closing function of a common facility, a use control function of various equipment installed in a room of a condominium, an use control function of various equipment installed in a common facility, and a delivery service use function of an article to be a reception destination are displayed on a monitor of an user system 200 (smart phone). The use authority setting request information is transmitted to the equipment function usage limitation part 113 as the use authority setting request information by checking the check box so that the user requests the use authority setting.

In the example of FIG. 18, the use authority setting of the door lock opening/closing function of the door of the condominium room, the use authority setting of the cable television, and the use authority setting of the so-called smart speaker are set as the use control function of various devices installed in the room of the condominium. By setting the use authority of the door lock opening/closing function of the door of the room of the condominium, the door can be opened and closed through user authentication. That is, it is possible to open/close a door opened/closed by a key with biological information such as user identification information. For example, a fingerprint pattern such as a condominium owner or a family of the condominium is set. In this case, the keyhole itself is not required, trouble such as forgetting of the key of the door at the time of home from the outing destination, loss of the key, etc. can be prevented, and illegal access such as picking of the key by theft can be prevented.

The use authority setting of the pool, the sport gym, the tennis court, the golf practice simulator, the bar, and the like are displayed as the use control function of various devices installed in the shared facility. The use authority setting request information is transmitted to the equipment function usage limitation part 113 as use authority setting request information by checking the check box for the use authority setting, and necessary reservation processing is executed, and charging processing and settlement processing can be executed with use.

When a so-called smart speaker is equipped at the time of selecting and designating the article, the function of utilizing the delivery service of the article to be the receiving destination of the room of the condominium enhances the convenience when inputting the data by verbal. In recent years, an ordering/ordering system for merchandise accompanied by home delivery service has been developed, and even in the usage assistance system 1 in the present invention, an order reception system for a commodity accompanied by the home delivery service can be used.

### Embodiment 9

The usage assistance system 1 according to the present invention is applied to a real estate use system including a hotel, a private house for lodging, a private house for accommodation, and a private apartment house for accommodation. The use unit is used as a real estate rental section or a shared facility. The authority person is an operator of a real estate rental section or a shared facility, and the user uses the rental section of the real estate or the user of the shared facility.

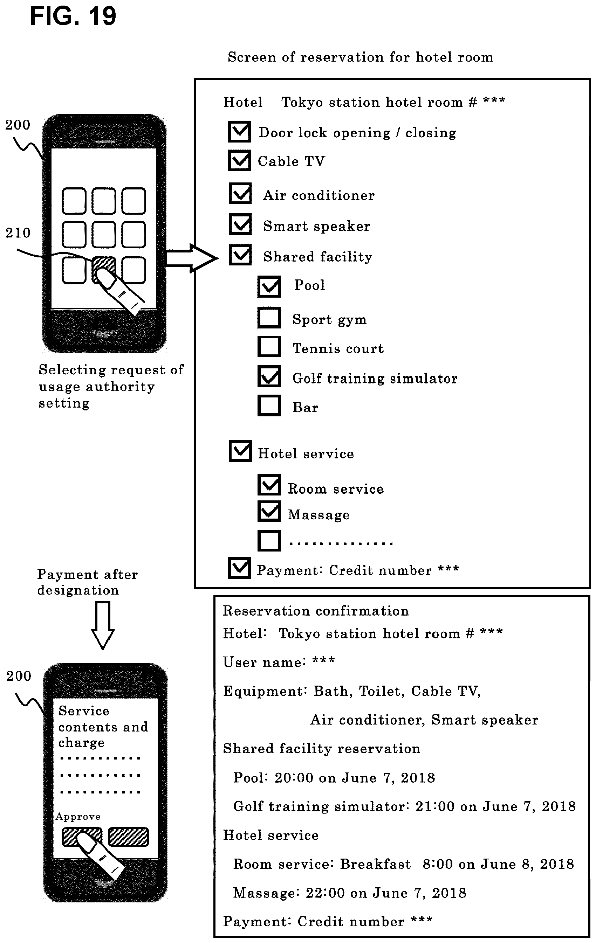

FIG. 19 is a drawing showing a designation screen of the equipment function 301 of real estate when the usage assistance system 1 according to the present invention is applied to a real estate use system. For example, a case where a room of a hotel and its shared facility are utilized object is described.

In an example of the display in the user system 200 (smart phone), as the equipment function is displayed such as, a reservation processing function of a hotel room, a common facility of a hotel, a door lock opening/closing function of a room of a hotel, a door lock opening/closing function of a shared facility of a hotel, an use control function of various equipment installed in a hotel room, an use charge processing function, a service use function of a hotel room as a service treatment place, and a data communication service use function with a hotel room is displayed. The use authority setting request information is transmitted to the equipment function usage limitation part 113 as the use authority setting request information by checking the check box so that the user requests the use authority setting.

In the example of FIG. 19, the use authority setting of the door lock opening/closing function of the door of the hotel room, the cable television, and the so-called smart speaker are set as the use control function of various devices installed in the hotel room. By setting the use authority of the door lock opening/closing function of the door of the room, the door can be opened and closed through user authentication.

The use authority setting of the pool, the sport gym, the tennis court, the golf practice simulator, the bar, and the like are displayed as the use control function of various devices installed in the shared facility. The use authority setting request information is transmitted to the equipment function usage limitation part 113 as use authority setting request information by checking the check box for the use authority setting, and necessary reservation processing is executed, and charging processing and payment processing can be executed with use.

As the service use function using a hotel room as the service treatment place, the use authority setting of the food and drink of the room service, the massage service, the laundry service, and the like can be used.

As described above, the function of utilizing the delivery service of the article to be the receiving destination of the hotel room can utilize the ordering system of the commodity accompanied by the home delivery service as the receiving destination of the hotel room even as the usage object in the usage assistance system 1 of the present invention.

### Embodiment 10

Embodiment 10 is an example in which an use support system 1 according to the present invention is applied to a reservation system of a logistic system, and is used as a storage section of a logistics warehouse. The authority person is the manager of the storage section of the logistics warehouse, and the user is the user of the logistics warehouse.

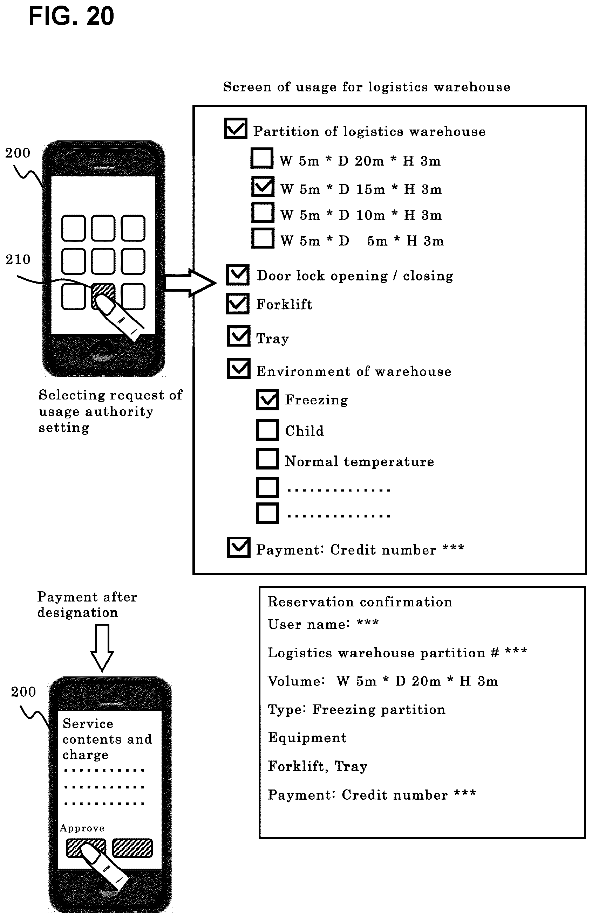

FIG. 20 is a drawing showing a designation screen of the equipment function 301 of a logistics warehouse when the usage assistance system 1 according to the present invention is applied to a logistics warehouse management system.

In the example of FIG. 20, the reservation processing function of the storage section of the logistics warehouse, the use control function of various equipment installed in the logistics warehouse, and the use charging processing function of the storage section of a logistics warehouse are displayed as equipment functions on the monitor of the user system 200 (smart phone). The use authority setting request information is transmitted to the equipment function usage limitation part 113 as the use authority setting request information by checking the check box so that the user requests the use authority setting.

In the example of FIG. 20, the use authority setting of the door lock opening/closing function of the door of the logistics warehouse, the forklift, and the truck are provided as the use control function of various devices installed in the logistics warehouse.

Here, the usage assistance system 1c of the use object of Embodiment 4 accompanied by charging processing is employed, and the use charging processing function of the logistics warehouse is operated.

### Embodiment 11

Embodiment 11 is an example in which the usage assistance system 1 according to the present invention is applied to the service providing facility system and serves as a facility for the service providing facility. The authority is the operator of the service providing facility, and the user is a user of the service providing facility.

For example, a service providing facility may include a medical institution, a care facility, a clinic, a sports club, a wedding hall, a funeral hall, a table or a private room, a beauty salon, a hairdressing chamber, a movie theater, a culture classroom, a rental conference room, a golf course, and the like. A wide variety of service providing facilities can be applied.

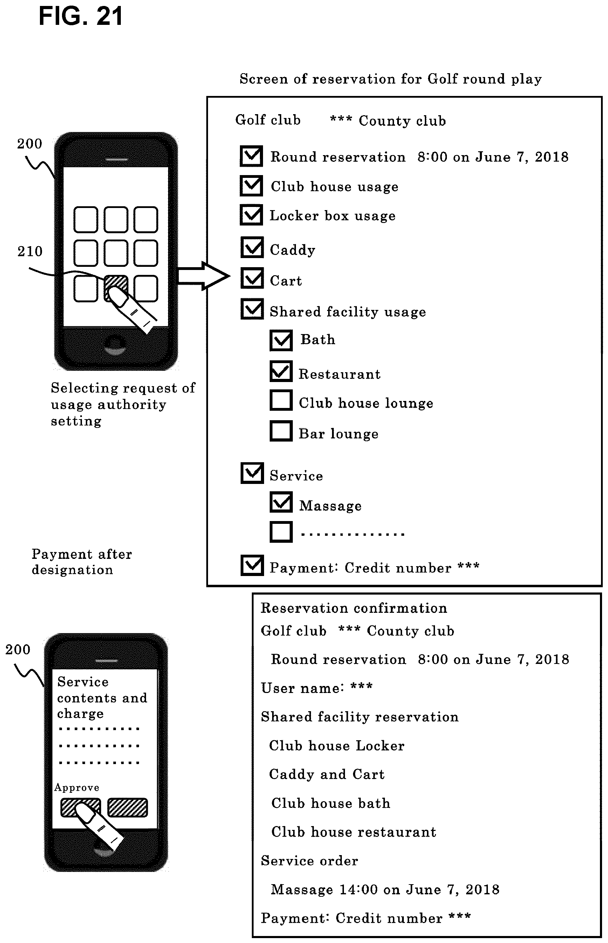

FIG. 21 is a drawing showing a designated screen of the equipment function 301 of a golf course and its shared facility when the usage assistance system 1 according to the present invention is applied to a golf service providing facility system.

In the example of FIG. 21, an equipment function which can be used is displayed on a monitor of the user system 200 (smart phone), a round reservation processing function of a golf course, an use control function of various equipment installed in a golf course, and an use charging processing function of a golf course are displayed. The use authority setting request information is transmitted to the equipment function usage limitation part 113 as the use authority setting request information by checking the check box so that the user requests the use authority setting.

In the example of FIG. 21, the use authority setting is performed by using the golf course and the service unit based on the round starting time frame as the use unit as the round reservation processing of the golf course. The use control function of various kinds of equipment installed in the golf course includes the locker, the caddie service, the cart, the restaurant of the club house, the shared bath facility, and the bar loungers.

Further, the use of the service is the massage service by a massager.

Here, the usage assistance system 1c of the use object of the embodiment 4 accompanied by charging processing is employed, and the use charging processing function of the golf course is operated.

### Embodiment 12

Embodiment 12 is an example applied to a service providing facility system, and a service provider who belongs to a service providing facility is provided as a use unit. The authority person is the operator of the service providing facility, and the user is a user of the service providing facility.

The service provider may be a wide variety of service providers in medical field such as, a doctor, a nurse, a dentist, a nurse, a judo therapist, a caregiver, a physical therapist and an occupational therapist, a service providers in other field such as an instructor of a sports club, a master of ceremonies belonging to a wedding hall, a wedding hall staff, a funeral staff, a chef, a beautician, a hairstylist, a seminar lecturer of a culture classroom, a lesson professional of a golf course, etc.

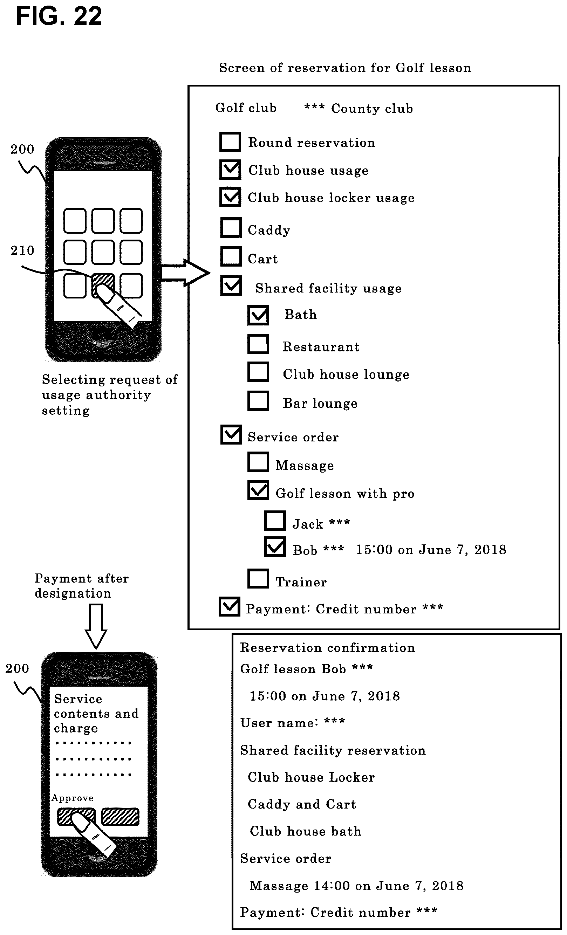

FIG. 22 is a drawing showing a designated screen of the equipment function 301 when the usage assistance system 1 of the use object according to the present invention is employed to the service of the service providing facility system. For example, a case where a golf lesson service in a golf course is used as a use unit will be described.

An example of the golf lesson use screen of FIG. 22 is the same as the example of the golf course round use screen of FIG. 21.

In the example of FIG. 22, as the equipment function of the user system 200 (smart phone), a reservation processing function of a golf lesson, a use control function of various equipment installed in a golf course at the upper part of the screen, and a service use charging processing function are displayed on the monitor of the user system 200 (smart phone). The use authority setting request information is transmitted to the equipment function usage limitation part 113 as the use authority setting request information by checking the check box so that the user requests the use authority setting.

The example shown in FIG. 22, as the use control function of various kinds of equipment installed in the golf course includes the use authority setting of the golf lesson by the professional golfer belonging to the golf course company, the health management by the trainer belonging to the golf course company, and the massage service by the massager belonging to the golf course company, in addition to use unit of the locker, the caddie service, the cart, the restaurant of the club house, the shared bath facility, and the bar loungers the same as shown in Fig. 21.

Here, the usage assistance system 1c of the use object of the Embodiment 4 accompanied by the charging processing is employed, and the lesson service by the professional golfer, the guidance service of the trainer, and the use charging processing function such as a massage service by the massager are operated.

While the example of the lesson unit of the golf lesson is described as an example, the service unit by the other service provider may be applied in accordance with the contents of the providing service.

### Embodiment 13

Embodiment 13 is an example in which an usage assistance system 1 of an use object according to the present invention is applied to a server, and an use period of the server and a data capacity of the server are used as the use unit. The authority person is the operator or the manager of the server, and the user is the user of the server.

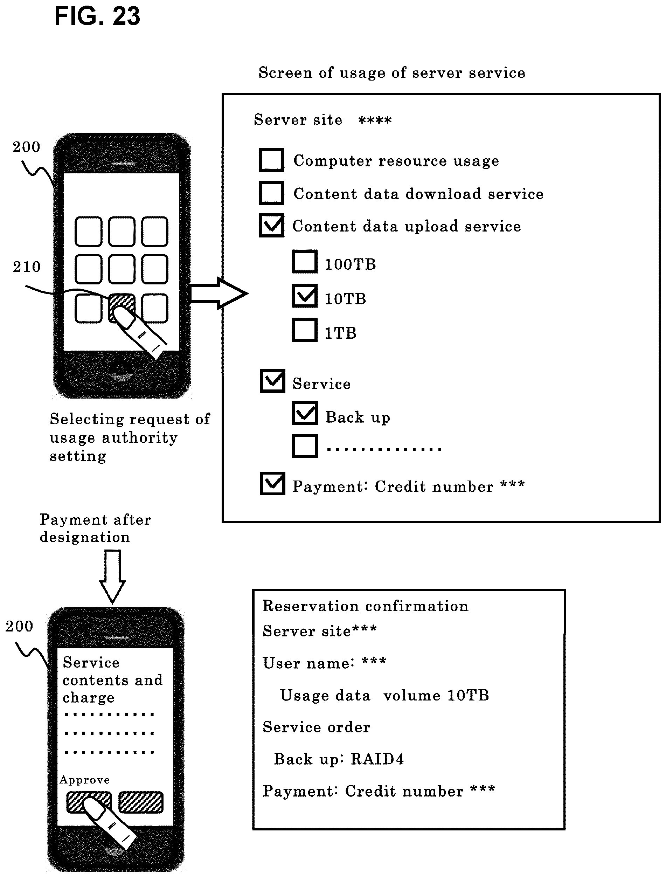

FIG. 23 is a drawing showing a designation screen of the equipment function 301 when the usage assistance system 1 according to the present invention is applied to a server.

In the example of FIG. 23, a server computer processing function, a server website providing function, a download control function of content data stored in a server, an upload storage control function of data to a server storage device, and a server use charging processing function are displayed on a monitor of the user system 200 (smart phone). The use authority setting request information is transmitted to the equipment function usage limitation part 113 of the authority system 100 as the use authority setting request information by checking the check box so that the user requests the use authority setting.

In this example, the usage assistance system 1c of the usage object of Embodiment 4 accompanied by charging processing is employed, and the use charging processing function is operated with the use of the server.

### Embodiment 14

Example 14 is an example in which an usage assistance system 1 according to the present invention is applied to either an ASP service or a cloud service or a combination thereof, and the use unit is a service of either an ASP service or a cloud service or a combination thereof. The authority is an administrator or manager of either an ASP service, a cloud service, or a combination thereof, and the user uses either an ASP service or a cloud service or a combination thereof via a network.

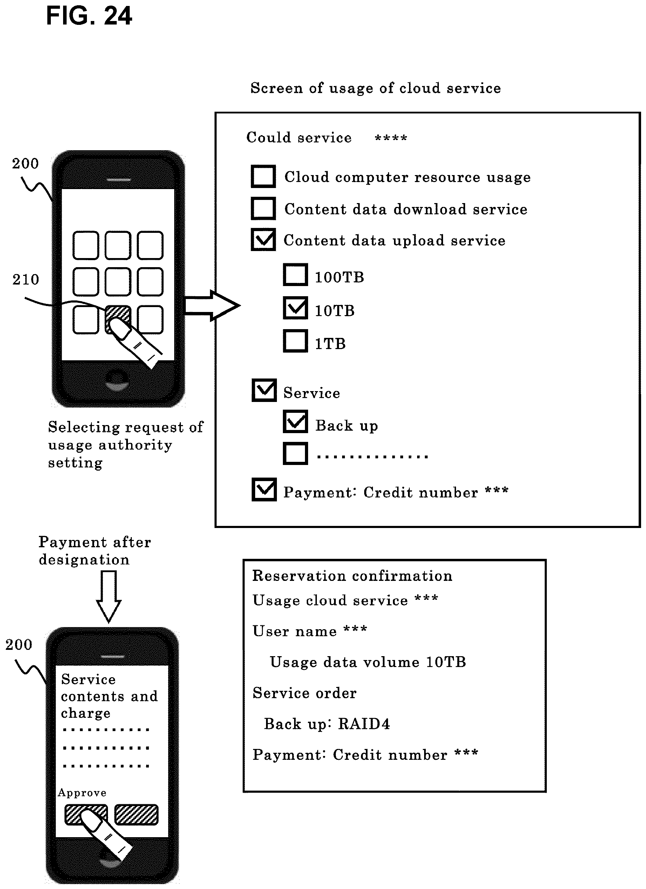

FIG. 24 is a drawing showing a designation screen of the equipment function 301 when the usage assistance system 1 according to the present invention is applied to a cloud service.

In the example of FIG. 24, a computer processing function including computer resources of a combination of cloud services, a download control function of content data, an upload storage control function of data, and a use charging processing function are displayed on the monitor of the user system 200 (smart phone). In order to request the use authority setting by the user, a check box is put in the check box to transmit the use authority setting request information to the equipment function usage limitation part 113.

Here, the usage assistance system 1c of the usage object of Embodiment 4 accompanied by the charging processing is employed, and the use charging processing function is operated in accordance with the use of the cloud service.

### Embodiment 15

Embodiment 15 is an example in which a usage assistance system 1a according to the present invention is applied to a vehicle driving support system. As an example of a usage object, a private vehicle is used, and as a use unit, a driver's seat of the private vehicle is used. The authority person is the parent of the family, and the users are the mother, the eldest son who holds the driver's license, and the eldest daughter who does not hold the driver's license.

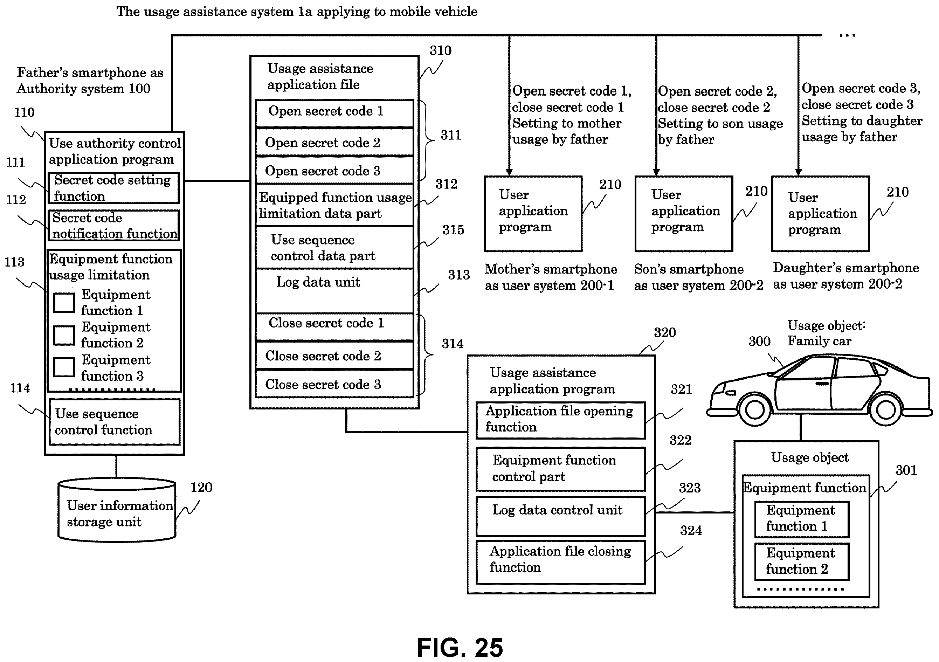

FIG. 25 is a drawing showing a system configuration example when the usage assistance system 1a of the usage object according to the present invention is applied to the driving support system of a private vehicle. Here, the use authority setting for three users is an example of the configuration example shown in FIG. 4 of Example 2.

The authority system 100 is a smartphone of the father who is the owner of the family vehicle. The usage authority control application program 110 is installed in the father's smartphone. The usage assistance application program 320 and the usage assistance application file 310 are installed in the computer resources of the private vehicle. Data related to the use setting is inputted from the authority system 100 to the usage assistance application file 310, and the use authority setting is performed

For example, the flow shown from FIG. 5 to FIG. 7 shown in Embodiment 2 showing operations via the authority system 100 of the father's smartphone, the open secret code 1 and close secret code 1, the open secret code 2 and close secret code 2, and the open secret code 3 and close secret code 3 are designated by an operation via the authority system 100 as the smartphone of the father respectively and each open secret code and close secret code is notified to each user system 200-1, 200-2 and 200-3 which are smartphones owned by the mother, the eldest son and the eldest daughter.

In this example, the use unit of date and time of the private vehicle is not limited, and when the vehicle is available, the mother, the eldest son or the eldest daughter can optionally utilize the vehicle, and the sequence control through the use sequence control function 114 is not performed.

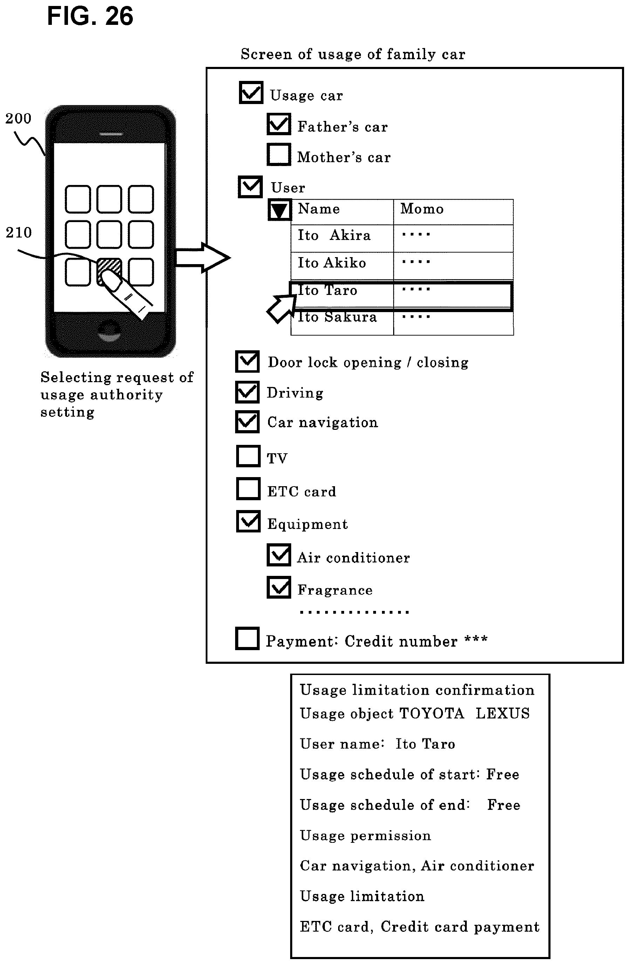

FIG. 26 is a drawing showing a designation screen at the time of setting the use authority of the vehicle and the equipment function 301 of the usage assistance system 1a of the use object according to the embodiment 15.

In the example of FIG. 26, the check column of the vehicle to be used, the designated column of the user, for example, the check column of the equipment function related to the vehicle is checked while the eldest son is specified. For example, there are many control function of various kinds of equipment such as a door lock opening/closing function, an operation function of the vehicle, car navigation and on-vehicle TV installed in the vehicle, and an ETC card use function etc. are displayed. But the check is removed from the TV viewing function because of the consideration of safe driving for the elder son. In addition, in order to prohibit the long-distance driving for the elder son, the function of using the ETC card is removed. Also, the check is also removed for the charging use function of the credit for the use of a meal or a hotel at the destination of traveling.

The restriction of the use authority according to the user is possible for each user. Although not shown. For example, all the use of the equipment function of the vehicle is set to the mother. On the other hand, the use authority setting corresponding to the driver, such as the check of the driving related function is removed for the daughter because she does not have the driver license, but use authority setting corresponding to the fellow passenger such as door lock opening/closing function is checked.

### INDUSTRIAL APPLICABILITY

The present invention can be widely applied as a usage assistance system and method for a usage object in which an authority person allows a user to use the usage object such as either a tangible movable property, a real estate, and a use unit thereof and an intangible property, data, ownership, a virtual currency use unit thereof.

### DESCRIPTION OF THE REFERENCE NUMERALS

- 1: usage assistance system
- 100: authority system
- 110: use authority control application program
- 111: secret code setting function
- 112: secret code notification function
- 113: equipment function usage limitation part
- 114: use sequence control function
- 120: user information storage unit
- 200: user system
- 210: user application program
- 211: open secret code update setting function
- 212: takeover function
- 213: close secret code update setting function
- 214: user charging processing function
- 310: usage assistance application file
- 311: open secret code
- 312: equipped function usage limitation data part
- 313: log data unit
- 314: close secret code
- 320: usage assistance application program
- 321: application file opening function
- 322: equipment function control part
- 323: log data control unit
- 324: application file closing function
- 325: target charging processing function
- 400: log data server cluster
- 500: payment processing part

## Claims

1. A usage assistance system in which the authority person allows the user to use the usage object, the usage assistance system comprises:
a usage assistance application program allows the user to use the equipment function equipped by the usage object;
a usage assistance application file used by the usage assistance application program, wherein an open secret code for opening the usage assistance application file and a closing secret code for closing the usage assistance application file are set;
an application file open function that opens the usage assistance application file by matching the input code with the open secret code at the opening of the usage assistance application file; and
an application file close function that normally terminates and closes the usage assistance application file by matching the input code with the close secret code at the terminating and closing of the usage assistance application file.

2. A usage assistance system according to claim 1, wherein the usage object may include a tangible object of a movable property or real estate, an intangible property of data, ownership right, a virtual currency, a virtual space, or a use section thereof.

3. A usage assistance system according to claim 1 or 2, wherein the authority system comprises a usage authority control application program, the usage authority control application program includes an equipment function usage limitation portion for setting and controlling the usage limitation to each user of each equipped function of the usage object or each use section thereof.

4. A usage assistance system according to any one of claims 1 to 3, wherein the use assistance application file is provided with a log data part for recording and holding the use log data of the equipment function of the usage object, and
the use assistance application program is provided with a log data control function for recording the use log data of the equipment function of the usage object in the log data area in the use assistance application file.

5. A usage assistance system according to any one of claims 1 to 4, wherein the usage authority control application program of the authority system has a secret code setting function for setting the open secret code and the close secret code, and a notification function for notifying the user application program of the user system used by the user what the set open secret code and the set close secret code.

6. A usage assistance system according to claim 5, wherein the open secret code and the close secret code which are related to a specified user are set by the authority system via the secret code setting function; and the set open secret code and the close secret code are notified to the user of the open secret code the close secret code by the notification function.

7. A usage assistance system according to claim 5, wherein the open secret code and the close secret code are set the validation as a disposable one-time secret code by the authority system via the secret code setting function; and the set open secret code and the close secret code are notified to the user of the open secret code the close secret code by the notification function.

8. A usage assistance system according to claim 5, when the authority system receives the request information for setting the usage authority of the usage object, the open secret code and the close secret code which are related to a specified user are set by the authority system via the secret code setting function corresponding to the user request information; and the set open secret code and the close secret code are notified to the user application program of the user system of the open secret code the close secret code by the notification function.

9. A usage assistance system according to claim 5, when the authority system receives the request information for setting the usage authority of the usage object, the open secret code and the close secret code are set the validation as a disposable one-time secret code by the authority system via the secret code setting function; and the set open secret code and the close secret code are notified to the user of the open secret code the close secret code by the notification function.

10. A usage assistance system according to according to any one of claims 1 to 9, wherein there are a plurality of users and when a plurality of open secret code and close secret code are set respectively by the use authority control application program via the secret code setting function, each set open secret code and close secret code corresponds to each user.

11. A usage assistance system according to claim 10, wherein the usage assistance application file includes a usage sequence control data that is utilized for controlling the startup order in which the application file opening function and application file closing function can be activated for each set of open secret code and close secret code, a sequence of usage order for multiple users can be managed.

12. A usage assistance system according to anyone of claims 5 to 9, wherein the use support application program further comprises; an open secret code update setting function for setting an open secret code for taking over to the next user; and a takeover function to notify the updated open secret code and non-updated close secret code to the user application program which the next user uses,
wherein the current user inputs the open secret code to the usage assistance application file open function to open the usage assistance application file, and after finishing the use of the usage object and before closing the usage assistance application file, the open secret code update setting function updates the open secret code in the form of designating the next user and the close secret code remains as the current close secret code, the open secret code and the close secret code are notified to the next user system of the user by the takeover function, a use authority chain connected from the current user to next user can be built.

13. A usage assistance system according to claim 12, wherein every time the closing process for the usage assistance application file is executed by the application file closing function, the user application program sends the log data stored in the log data section to the authority system or sends to distributed log data server cluster provided on the network, the log data can be collected.

14. A usage assistance system according to anyone of claims 5 to 9, wherein the use support application program further comprises; an open secret code update setting function for setting an open secret code for taking over to the next user; and a takeover function to notify the updated open secret code and non-updated close secret code to the user application program which the next user uses,
wherein the current user inputs the open secret code to the usage assistance application file open function to open the usage assistance application file, and after finishing the use of the usage object, the open secret code update setting function updates the open secret code in the form of designating the next user and input the close secret code to the usage assistance application file close function to close the usage assistance application file,
the open secret code is notified to the next user system of the user by the takeover function, a use authority chain connected from the current user to next user can be built.

15. A usage assistance system according to claim 14, wherein every time the authority system executes the closing process by the application file closing function, the authority system sends the log data stored in the log data section to the authority system or sends to distributed log data server cluster provided on the network, the log data can be collected.

16. A usage assistance system according to anyone of claims 5 to 9, wherein the use support application program further comprises; an open secret code update setting function for setting an open secret code for taking over to the next user; a close secret code update setting function for setting a close secret code for taking over to the next user; and a takeover function to notify the updated open secret code updated close secret code to the user application program which the next user uses,
wherein the current user inputs the open secret code to the usage assistance application file open function to open the usage assistance application file, and after finishing the use of the usage object and before closing the usage assistance application file by the close secret code, the open secret code update setting function and the close secret code update setting function update the open secret code and the close secret code in the form of designating the next user, the open secret code and the close secret code are notified to the next user system of the user by the takeover function, a use authority chain connected from the current user to next user can be built.

17. A usage assistance system according to claim 16, wherein every time the closing process for the usage assistance application file is executed by the application file closing function, the user application program sends the log data stored in the log data section to the authority system or sends to distributed log data server cluster provided on the network, the log data can be collected.

18. A usage assistance system according to anyone of claims 1 to 17, wherein the secret code set as the open secret code and the close secret code may be any one of user ID information, biometric information, credit card information, debit card information, or a combination thereof.

19. A usage assistance system according to anyone of claims 1 to 18, the usage assistance application program further comprises a usage object charging processing function that performs charging processing according to the usage status of the equipment function, and the user system comprises a user payment processing function,
wherein the determination of the charging content and the payment processing linked with a financial institution are executed according to the usage content of the use of the usage object.

20. A usage assistance system according to anyone of claims 1 to 19, the usage object is provided with a door, and
application file opening function and the application file closing function are linked with the door lock opening / closing function of the door provided in the usage object, and wherein the door lock opening / closing function is activated when the authentication process of the open secret code and the close secret code is successful.

21. A usage assistance system according to anyone of claims 1 to 19, the usage object is a mobile body including a railroad vehicle, an aircraft, a ship, a passenger car vehicle, and a freight vehicle; a use section thereof is a seat, a guest room, or a common facility of the moving body, and the authorized person is the moving body; the user is a passenger of the moving vehicle, and
the equipment function to be used includes any one of a reservation processing function for seat, guest room or shared facility; and a use control function of various devices installed in a seat, guest room or shared facility; a delivery service use function of goods to receive at seat, guest room or shared facility; data communication service use function to receive at seat, guest room or shared facility; a usage charging processing function of a shared facility; or a combination thereof.

22. A usage assistance system according to anyone of claims 1 to 19, when the usage object is a mobile body including a railroad vehicle, an aircraft, a ship, a passenger car vehicle, and a freight vehicle; a usage unit may include a driver's cabin, passenger seats, a service providing facility attached to the train; and the authority person is an operator of the moving body; the user is a driver or a person in charge of operation of the moving vehicle, and
the equipment functions to be used includes any one of a door lock opening / closing function of the driver's cabin and a control function of various driving operation devices equipped in the driver's cabin, a control function of various devices related to the environment in the driver's cabin, a control function of various devices related to the environment other than the driver's cabin, a data communication function with the center controlling the mobile body, or a combination thereof.

23. A usage assistance system according to anyone of claims 1 to 19, when the usage object is a rental product, the authority person is an operator or a manager of the rental product, the user is a user of the rental product,
wherein the equipment function of the usage object is the rental product includes a reservation processing function, a usage control function of various devices equipped in the rental product, a usage charge processing function of the rental product, or a combination thereof.

24. A usage assistance system according to anyone of claims 1 to 19, when the usage object is a real estate including a residence, an apartment house, a building; the use section is the owned partition of the real estate, the leased partition, or a common facility of the real estate; and the authority person is the owner of the owned partition of residence, the leased partition of the real estate; the user is a user of the real estate, the rental partition, or common facility; and
the equipment function to be used includes any one of a door lock opening / closing function of the residence, rental partition, or common facility; a usage control function of various devices installed in the residence, rental partition or common facility: a delivery service use function of goods to the residence, rental partition or common facility; a data communication service use function in the residence, a rental partition, or common facility: a use charge processing function of the shared facility.

25. A usage assistance system according to anyone of claims 1 to 19, when the usage object is a real estate including a hotel, a private housing for accommodation, and a private condominium for accommodation; the usage section is a rental room partition or a common facility of the real estate; the authority person is manager of the rental room partition or a common facility of the real estate; the user is a user of the rental room partition or a common facility of the real estate; and
the equipment function to be used includes any one of a reservation processing function of the rental room partition or a common facility of the real estate; a door lock opening / closing function of the rental room partition or a common facility, a usage charge processing function of the rental room partition or a common facility, a delivery service use function of goods to the rental room partition or a common facility, or a service use function with the shared facility as the service operation location, a data communication service use function with the rental room partition or a common facility as the receiving destination, a use control function of various devices installed in the rental room partition or a common facility.

26. A usage assistance system according to anyone of claims 1 to 19, when the usage object is a logistics warehouse, the usage section is a storage section of the logistics warehouse, the authority person is an operator or manager of the logistics warehouse, and the user is a user of the logistics warehouse,
the equipment function to be used includes any one of a reservation processing function of the storage section of the logistics warehouse, a use control function of various devices equipped in the logistics warehouse, or a usage charge processing function of the storage section of the logistics warehouse.

27. A usage assistance system according to anyone of claims 1 to 19, when the usage object is a service providing facility, the used section is an equipment of the service providing facility, the authority person is an operator or a manager of the equipment of the service providing facility, and the user is the user of the service providing facility, and
the equipment function to be used includes any one of a reservation processing function of the service providing facility, a usage control function of various devices equipped in the service providing facility, a usage charge processing function of the service providing facility.

28. A usage assistance system according to anyone of claims 1 to 19, when the usage object is a service providing facility, the usage section is a service provided by a service provider belonging to the service providing facility, the authority person is the service provider itself or an operator or a manager, and the user is the user who receives the service, and
the equipment function to be used includes any one of a reservation processing function of the service, a usage control function of various devices equipped in the service, a usage charge processing function of the service.

29. A usage assistance system according to claim 28, wherein the service providing facilities are any one of a medical institutions, a nursing homes, a clinics, a sports clubs, a wedding halls, a funeral homes, a restaurant tables or private banquet rooms, a beauty salons, a barber shops, a movie theaters, a karaoke boxes, a culture classes, a rental conference rooms, a golf club,
wherein the service provider is a person to provide the service to the customer at the service providing facilities.

30. A usage assistance system according to anyone of claims 1 to 19, when the usage object is a server, the usage section is a usage period of the server or a data capacity of the server, the authority person is an operator or administrator of the server, and the user is the user of the server, and
the equipped function of the usage object includes any one of a computer processing functions in the computer resources of the server, a web site providing function of the server, a upload storage control function of the data to the storage device of the server, a use charging processing function of the server.

31. A usage assistance system according to anyone of claims 1 to 19, when the usage object is either an ASP service, a cloud service, or a combination thereof; the usage section is a service provided by the ASP service, the cloud service, or a combination thereof; the authority person is an operator or administrator of the ASP service, the cloud service, or a combination thereof; the user is the user the of ASP service the cloud service, or a combination thereof via network;
the equipment functions to be used includes any one of an input / output function, a data browsing function, a data editing function, a data download function, and a data upload function for the services provided by the ASP service, the cloud service, or a combination thereof.

32. A usage assistance system according to anyone of claims 1 to 19, when the usage object is a virtual currency, the authority is the issuer or administrator of the virtual currency, the user is a user of the virtual currency, and
the usage section is the authority to store and holds the usage assistance application file associated with the data of the virtual currency, specify the next user and set the open secret code and the close secret code for taking over by the secret code setting function.

33. A usage assistance method for the authority person allowing the user to use the usage object,
using a usage assistance application program controlling the user to use the equipment function equipped by the usage object;
using a usage assistance application file used by the usage assistance application program, wherein an open secret code for opening the usage assistance application file and a closing secret code for closing the usage assistance application file are set;
using an application file open function that opens the usage assistance application file by matching the input code with the open secret code at the opening of the usage assistance application file; and
using an application file close function that normally terminates and closes the usage assistance application file by matching the input code with the close secret code at the terminating and closing of the usage assistance application file.
